(19) Europäisches Patentamt
European Patent Office
Office européen des brevets

(11) EP 4 450 280 A1

(12) EUROPEAN PATENT APPLICATION
published in accordance with Art. 153(4) EPC

(43) Date of publication:
**23.10.2024 Bulletin 2024/43**

(21) Application number: **22907385.3**

(22) Date of filing: **09.12.2022**

(51) International Patent Classification (IPC):
***B32B 27/32** (2006.01)* ***B32B 27/40** (2006.01)*
***C08J 5/12** (2006.01)* ***C08K 3/013** (2018.01)*
***C08K 3/34** (2006.01)* ***C08L 23/08** (2006.01)*
***C08L 23/10** (2006.01)* ***C08L 23/12** (2006.01)*

(52) Cooperative Patent Classification (CPC):
**B32B 27/32; B32B 27/40; C08J 5/12; C08K 3/013; C08K 3/34; C08L 23/08; C08L 23/10; C08L 23/12**

(86) International application number:
**PCT/JP2022/045494**

(87) International publication number:
**WO 2023/112858 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.12.2021 JP 2021202932**

(71) Applicants:
- **Prime Polymer Co., Ltd.**
  **Tokyo 104-0028 (JP)**
- **Sika Technology AG**
  **6340 Baar (CH)**

(72) Inventors:
- **FUKUDA Yusuke**
  **6161RE Geleen (NL)**
- **TAKAHASHI Shuichi**
  **Bang Sue, Bangkok 10800 (TH)**
- **MATSUKI Yuichi**
  **Hiratsuka-shi, Kanagawa 254-0014 (JP)**
- **ABE Megumi**
  **Hiratsuka-shi, Kanagawa 254-8601 (JP)**
- **MIURA Kazuki**
  **Hiratsuka-shi, Kanagawa 254-8601 (JP)**
- **IKEDA Akio**
  **Hiratsuka-shi, Kanagawa 254-0014 (JP)**

(74) Representative: **J A Kemp LLP**
**80 Turnmill Street**
**London EC1M 5QU (GB)**

# (54) LAYERED STRUCTURE AND USE FOR SAME

(57) The layered structure of the present invention is a layered structure formed by directly layering a resin cured layer (ii) containing a curable resin (E) having a urethane bond, on a molded body (i) composed of a polypropylene-based resin composition,
wherein the polypropylene-based resin composition contains 5 to 47 parts by mass of a propylene-based polymer (A) having an MFR of 50 to 150 g/10 min, and an amount of a decane-soluble portion of 6 to 15% by mass, 20 to 30 parts by mass of a propylene homopolymer (B) having an MFR of 10 to 500 g/10 min, 23 to 30 parts by mass of an ethylene/α-olefin copolymer (C) being a random copolymer of ethylene and an α-olefin having 4 to 8 carbon atoms, and having a density of 0.850 to 0.880 g/$cm^3$, an MFR of 0.5 to 30 g/10 min, and a melting point peak of 110°C or more, and 30 to 40 parts by mass of an inorganic filler (D).

[Fig. 1]

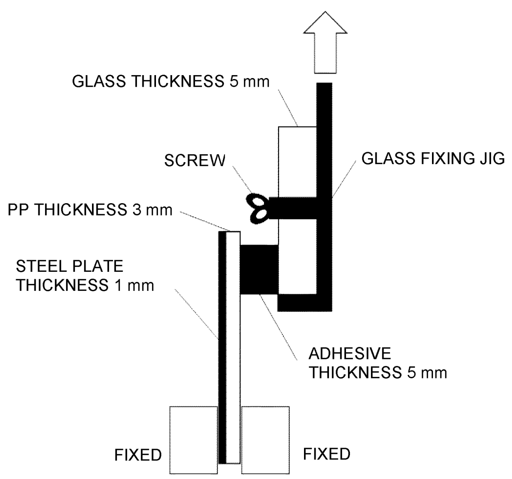




Processed by Luminess, 75001 PARIS (FR)

## Description

### Technical Field

The present invention relates to a layered structure used for, for example, an automobile exterior member, the layered structure having a layer of a molded body composed of a polypropylene-based resin composition.

### Background Art

In the field of automobile components, use of resin as an outer panel material is positively promoted by manufacturers according to the needs of the reduction in weight of an automobile. In this trend, a back door outer is also increasingly switched from metal to resin. To use resin as the outer panel material, the dimension accuracy equivalent to metal is required from the viewpoint of design, and thus, a material having a low coefficient of linear expansion is required. In addition, since a back door material is required to be bonded with other members, high adhesion performance is also required.

Meanwhile, a molded body obtained from a resin composition such as polypropylene has been more and more utilized in various fields such as automobile components and home appliance components, in terms of its excellent mechanical properties and moldability, and further, its cost performance that is relatively advantageous as compared with that of other materials. However, in general, polypropylene has a relatively large dimensional change (coefficient of linear expansion) with temperature. In such a situation, various polypropylene-based resin compositions in which the dimensional stability is improved by blending, for example, an inorganic filler such as talc, and an elastomer component into polypropylene are proposed (see Patent Literatures 1 to 8). However, the means for improving adhesion performance in the case where molded bodies of these polypropylene-based resin compositions are bonded with other members has not been taught.

### Citation List

#### Patent Literature

Patent Literature 1: JP2010-077396A
Patent Literature 2: JPH5(1993)-051498A
Patent Literature 3: JP2000-095919A
Patent Literature 4: JP2007-91789A
Patent Literature 5: JP2013-159709A
Patent Literature 6: JP2014-58614A
Patent Literature 7: JP2016-84386A
Patent Literature 8: WO2017/082358

### Summary of Invention

#### Technical Problem

To achieve a polypropylene-based molded body having a low linear expansion, the amount of an auxiliary material having a low coefficient of linear expansion is required to be increased as described above. Further, to impart coating performance, the blending ratio of rubber is required to be increased. For these reasons, a polypropylene compounded material for a resin outer panel has a significantly high blending ratio of a filler and rubber, and when being bonded to other members, interface delamination likely occurs at the interface between the auxiliary material and the polypropylene compounded material during adhesiveness testing, so that the polypropylene compounded material has such a problem that the reduction in strength likely occurs. Moreover, since polypropylene itself has no polar functional group, flame treatment or plasma treatment is required to form a firm chemical bond with an adhesive, and there are such problems that the substrate surface is damaged by being subjected to the treatment and the reduction in adhesion strength likely occurs. Although a primer is typically used to ensure the adhesion strength, use of a primer causes an increase in costs and an increase in production processes. Accordingly, there is desired the development of a composite material having sufficient adhesion strength in a primerless manner while achieving two characteristics, high dimensional stability and high adhesion performance, and maintaining a low coefficient of linear expansion that is required for an outer panel material.

An object of the present invention is to provide a layered structure of a molded body composed of a polypropylene-based resin composition and a resin cured layer, the layered structure having a low coefficient of linear expansion and having high adhesion strength to a resin cured layer such as an adhesive layer in a primerless manner.

Solution to Problem

As a result of diligent studies in view of the above situation, the present inventors have found that a layered structure of a molded body composed of a polypropylene-based resin composition that contains an ethylene/α-olefin copolymer having a significantly high melting point as an elastomer component, and a specific resin cured layer has not only excellent dimensional stability, but also high adhesion strength between the specific molded body and the specific curable resin even at high temperature where adhesiveness tends to be decreased, and completed the present invention.
The present invention relates to, for example, the following items.

[1] A layered structure formed by directly layering a resin cured layer (ii) comprising a curable resin (E) having a urethane bond, on a molded body (i) comprising a polypropylene-based resin composition,
wherein the polypropylene-based resin composition comprises:

5 to 47 parts by mass of a propylene-based polymer (A) having a melt flow rate (230°C, 2.16 kg load) of 50 to 150 g/10 min and an amount of a decane-soluble portion of 6 to 15% by mass,
20 to 30 parts by mass of a propylene homopolymer (B) having a melt flow rate (230°C, 2.16 kg load) of 10 to 500 g/10 min,
23 to 30 parts by mass of an ethylene/α-olefin copolymer (C) being a random copolymer of ethylene and an α-olefin having 4 to 8 carbon atoms, and having a density of 0.850 to 0.880 g/cm$^3$, a melt flow rate (230°C, 2.16 kg load) of 0.5 to 30 g/10 min, and a melting point peak of 110°C or more, and
30 to 40 parts by mass of an inorganic filler (D), provided that a total amount of the components (A) to (D) is 100 parts by mass.

[2] The layered structure according to [1], wherein the layered structure has a hot shear test strength at 90°C of more than 1.5 MPa in a primerless adhesion test.
[3] The layered structure according to [1] or [2], wherein the propylene-based polymer (A) is a block copolymer of propylene and ethylene, and an intrinsic viscosity [η] of a decane-soluble portion of the copolymer is 2 to 9 dl/g.
[4] The layered structure according to any one of [1] to [3], wherein the inorganic filler (D) is talc and has an aspect ratio of 3 or more and less than 15.
[5] The layered structure according to any one of [1] to [4], wherein the resin cured layer comprising the curable resin (E) having a urethane bond is a cured product of a urethane-based adhesive containing a urethane prepolymer having a polyether skeleton and an aliphatic isocyanate derivative.
[6] The layered structure according to any one of [1] to [5], wherein the molded body (i) is an injection molded body or a press molded body.
[7] The layered structure according to any one of [1] to [6], wherein the layered structure is used for an automobile exterior member.
[8] An automobile exterior member comprising the layered structure according to any one of [1] to [7].
[9] A method for producing a layered structure, the method comprising:

a step of molding a polypropylene-based resin composition comprising:

5 to 47 parts by mass of a propylene-based polymer (A) having a melt flow rate (230°C, 2.16 kg load) of 50 to 150 g/10 min and an amount of a decane-soluble portion of 6 to 15% by mass,
20 to 30 parts by mass of a propylene homopolymer (B) having a melt flow rate (230°C, 2.16 kg load) of 10 to 500 g/10 min,
23 to 30 parts by mass of an ethylene/α-olefin copolymer (C) being a random copolymer of ethylene and an α-olefin having 4 to 8 carbon atoms, and having a density of 0.850 to 0.880 g/cm$^3$, a melt flow rate (230°C, 2.16 kg load) of 0.5 to 30 g/10 min, and a melting point peak of 110°C or more, and
30 to 40 parts by mass of an inorganic filler (D),

provided that a total amount of the components (A) to (D) is 100 parts by mass by injection molding or press molding to produce a molded body (i), and
a step of contacting or applying a curable resin (E) having a urethane bond or a raw material thereof with or to the molded body (i), followed by curing to form a resin cured layer (ii).

[10] A curable resin composition used to form an adhesive layer for use by being directly layered on a molded body comprising a polypropylene-based resin composition comprising:

5 to 47 parts by mass of a propylene-based polymer (A) having a melt flow rate (230°C, 2.16 kg load) of 50 to 150 g/10 min and an amount of a decane-soluble portion of 6 to 15% by mass,
20 to 30 parts by mass of a propylene homopolymer (B) having a melt flow rate (230°C, 2.16 kg load) of 10 to 500 g/10 min,
23 to 30 parts by mass of an ethylene/α-olefin copolymer (C) being a random copolymer of ethylene and an α-olefin having 4 to 8 carbon atoms, and having a density of 0.850 to 0.880 g/cm$^3$, a melt flow rate (230°C, 2.16 kg load) of 0.5 to 30 g/10 min, and a melting point peak of 110°C or more, and
30 to 40 parts by mass of an inorganic filler (D), provided that a total amount of the components (A) to (D) is 100 parts by mass,

wherein the curable resin composition comprises a urethane prepolymer having a polyether skeleton and an aliphatic isocyanate derivative.
[11] The curable resin composition according to [10], further comprising an adduct of a compound represented by the following formula (X):

[Chem. 1]

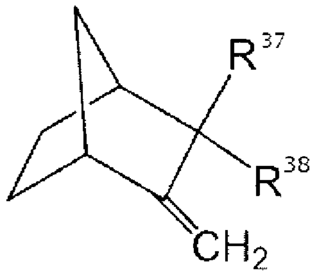

(X)

wherein $R^{37}$ and $R^{38}$ each independently represent a hydrocarbon group,
with a phenolic compound.

[12] The curable resin composition according to [10] or [11], wherein the aliphatic isocyanate derivative of the curable resin composition comprises an isocyanurate of pentamethylene diisocyanate.

Advantageous Effects of Invention

According to the present invention, a layered structure in which a molded body composed of a polypropylene-based resin composition and a resin cured layer are directly layered without interposing a primer, and which has a low coefficient of linear expansion, excellent dimensional stability, and high adhesion strength between the specific molded body and the specific curable resin in a primerless manner even at high temperature where adhesiveness tends to be decreased, can be provided.

Brief Description of Drawing

Figure 1 is a schematic diagram of the measurement of hot shear test strength of a layered structure.

Description of Embodiments

The present invention will be specifically described below.
The layered structure of the present invention is a layered structure formed by directly layering a resin cured layer (ii) containing a curable resin having a urethane bond, on a molded body (i) composed of a polypropylene-based resin composition, and is specifically, for example, a layered structure in which a molded body (i) composed of a polypropylene-based resin composition and a curable resin layer (ii) formed of, for example, a urethane-based adhesive are directly layered without interposing a primer.

[Molded body (i)]

The molded body (i) according to the present invention is a molded body composed of a polypropylene-based resin composition.

Polypropylene-based resin composition

The polypropylene-based resin composition according to the present invention contains a propylene-based polymer (A), a propylene homopolymer (B), an ethylene/$\alpha$-olefin copolymer (C), and an inorganic filler (D), and further contains other components as necessary.

<Propylene-based polymer (A)>

The propylene-based polymer (A) used in the present invention is a propylene-based polymer having a melt flow rate (230°C, 2.16 kg load) of 50 to 150 g/10 min and an amount of a decane-soluble portion of 6 to 15% by mass.

The propylene-based polymer (A) substantially contains 6 to 15% by mass of a decane-soluble portion (a1) and 85 to 94% by mass of a decane-insoluble portion (a2). The decane-insoluble portion (a2) typically refers to a component insoluble in an n-decane solvent at room temperature (23°C), and is usually equivalent to a propylene homopolymer portion (propylene homopolymer component) in the propylene-based polymer (A). The decane-soluble portion (a1) is equivalent to the portion other than the propylene homopolymer portion, and is preferably a copolymer portion of propylene and ethylene (ethylene/propylene copolymer component).

The propylene-based polymer (A) usually contains 6 to 15% by mass of the decane-soluble portion (a1) and 85 to 94% by mass of the decane-insoluble portion (a2), and preferably contains 7 to 12% by mass of the decane-soluble portion (a1) and 88 to 93% by mass of the decane-insoluble portion (a2), wherein the sum of the content of (a1) and the content of (a2) is 100% by mass.

The propylene-based polymer (A) is preferably a propylene-based block copolymer obtained from propylene and ethylene. The intrinsic viscosity [$\eta$] of the decane-soluble portion (a1) of the propylene-based block copolymer is preferably 2 to 9 dl/g, and more preferably 3 to 8 dl/g.

The melt flow rate (230°C, 2.16 kg load) of the propylene-based polymer (A) is 50 to 150 g/10 min, preferably 50 to 130 g/10 min, more preferably 60 to 120 g/10 min, and particularly preferably 70 to 110 g/10 min.

The propylene-based polymer (A) can be produced by a known method. For example, a propylene-based block copolymer can be obtained by polymerizing propylene using a catalyst for olefin polymerization containing a solid titanium catalyst component (I) and an organometallic compound catalyst component (II) described below, and further copolymerizing propylene and ethylene.

[Solid titanium catalyst component (I)]

The solid titanium catalyst component (I) constituting the catalyst for olefin polymerization contains, for example, titanium, magnesium, halogen, and as necessary, an electron donor. Known components can be used for the solid titanium catalyst component (I) without limitation.

In the preparation of the solid titanium catalyst component (I), a magnesium compound and a titanium compound are used in many cases.

Specific examples of the magnesium compound include magnesium halides such as magnesium chloride and magnesium bromide; alkoxymagnesium halides such as methoxymagnesium chloride, ethoxymagnesium chloride, and phenoxymagnesium chloride; alkoxymagnesium such as ethoxymagnesium, isopropoxymagnesium, butoxymagnesium, and 2-ethylhexoxymagnesium; aryloxymagnesium such as phenoxymagnesium; and carboxylic acid salts of magnesium, such as magnesium stearate. One of magnesium compounds may be used singly, or two or more may be used in combination. Moreover, such a magnesium compound may be a complex compound with another metal, a composite compound, or a mixture with another metal compound.

Among them, a magnesium compound containing halogen is preferable, and magnesium halide, in particular, magnesium chloride is more preferable. Further, alkoxymagnesium such as ethoxymagnesium is also preferable. The magnesium compound may be a compound that is derived from another substance, such as a compound obtained by contacting an organomagnesium compound such as a Grignard reagent with, for example, titanium halide, silicon halide, or alcohol halide.

Examples of the titanium compound include a tetravalent titanium compound represented by the following formula.

$$Ti\,(OR)_gX_{4-g}$$

wherein R is a hydrocarbon group, X is a halogen atom, and g satisfies $0 \leq g \leq 4$.

Specific examples of the titanium compound include titanium tetrahalides such as $TiCl_4$ and $TiBr_4$; alkoxytitanium trihalides such as $Ti(OCH_3)Cl_3$, Ti $(OC_2H_5)Cl_3$, $Ti(O\text{-}n\text{-}C_4H_9)Cl_3$, $Ti(OC_2H_5)Br_3$, and $Ti(O\text{-}i\text{-}C_4H_9)Br_3$; alkoxytitanium dihalides such as $Ti(OCH_3)_2Cl_2$ and $Ti(OC_2H_5)_2Cl_2$; alkoxytitanium monohalides such as $Ti(OCH_3)_3Cl$, $Ti(O\text{-}n\text{-}C_4H_9)_3Cl$, and $Ti(OC_2H_5)_3Br$; and tetraalkoxytitanium such as $Ti(OCH_3)_4$, $Ti(OC_2H_5)_4$, $Ti(OC_4H_9)_4$, and $Ti(O\text{-}2\text{-}ethylhexyl)_4$. One of titanium compounds may be used singly, or two or more may be used in combination. Among them, titanium tetrahalide is preferable, and titanium tetrachloride is more preferable.

For example, compounds described in detail in JPS57(1982)-63310A and JPH5(1993)-170843A can also be used as the magnesium compound and the titanium compound.

Specific examples of a preferred method for preparing the solid titanium catalyst component (I) used in the present invention include the following methods (P-1) to (P-4).

(P-1) Method involving contacting a solid adduct composed of a magnesium compound and an electron donor component (1) such as alcohol, an electron donor component (2) described below, and a liquid titanium compound with each other in a suspended state in the presence of an inert hydrocarbon solvent.

(P-2) Method involving contacting a solid adduct composed of a magnesium compound and an electron donor component (1), an electron donor component (2), and a liquid titanium compound with each other in divided portions.

(P-3) Method involving contacting a solid adduct composed of a magnesium compound and an electron donor component (1), an electron donor component (2), and a liquid titanium compound with each other in a suspended state and in divided portions in the presence of an inert hydrocarbon solvent.

(P-4) Method involving contacting a liquid magnesium compound composed of a magnesium compound and an electron donor component (1), a liquid titanium compound, and an electron donor component (2) with each other.

The reaction temperature in preparing the solid titanium catalyst component (I) is preferably -30 to 150°C, more preferably -25 to 130°C, and particularly preferably -25 to 120°C.

The preparation of the solid titanium catalyst component (I) can be carried out also in the presence of a known medium as necessary. Specific examples of the medium include slightly polar aromatic hydrocarbons such as toluene and known aliphatic hydrocarbons and alicyclic hydrocarbons such as heptane, octane, decane, and cyclohexane. Among them, aliphatic hydrocarbons are preferable.

The electron donor component (1) used to form the solid adduct and the liquid magnesium compound is preferably a known compound capable of solubilizing the magnesium compound in a temperature range of about room temperature to 300°C, and, for example, alcohols, aldehydes, amines, carboxylic acids, and mixtures thereof are preferable. Examples of these compounds include compounds described in JPS57(1982)-63310A and JPH5(1993)-170843A.

Specific examples of the alcohol capable of solubilizing the magnesium compound include aliphatic alcohols such as methanol, ethanol, propanol, butanol, isobutanol, ethylene glycol, 2-methylpentanol, 2-ethylbutanol, n-heptanol, n-octanol, 2-ethylhexanol, decanol, and dodecanol; alicyclic alcohols such as cyclohexanol and methylcyclohexanol; aromatic alcohols such as benzylalcohol and methylbenzylalcohol; and aliphatic alcohols having an alkoxy group, such as n-butylcellosolve.

Specific examples of carboxylic acids include organic carboxylic acids having 7 or more carbon atoms, such as caprylic acid and 2-ethylhexanoic acid. Specific examples of aldehydes include aldehydes having 7 or more carbon atoms, such as capric aldehyde and 2-ethylhexyl aldehyde. Specific examples of amines include amines having 6 or more carbon atoms, such as heptylamine, octylamine, nonylamine, laurylamine, and 2-ethylhexylamine.

Preferable examples of the electron donor component (1) include the above alcohols, and ethanol, propanol, butanol, isobutanol, hexanol, 2-ethylhexanol, and decanol are particularly preferable.

While the compositional ratio of magnesium to the electron donor component (1) in the resulting solid adduct and the liquid magnesium compound cannot be generally specified because the ratio varies according to the kind of compound used, the electron donor component (1) per mole of magnesium in the magnesium compound is preferably 2 mol or more, more preferably 2.3 mol or more, and particularly preferably 2.7 mol or more, and 5 mol or less.

Particularly preferable examples of the electron donor used in the solid titanium catalyst component (I) as necessary include compounds having two or more ether bonds via an aromatic carboxylic acid ester and/or a plurality of carbon atoms (hereinafter referred to as the "electron donor component (2)") .

Known aromatic carboxylic acid esters and polyether compounds that are preferably used in conventional catalysts for olefin polymerization, such as compounds described in JPH5(1993)-170843A and JP2001-354714A, can be used without limitations as the electron donor component (2).

Specific examples of the aromatic carboxylic acid esters include aromatic carboxylic acid monoesters such as benzoic acid esters and toluic acid esters, and aromatic polycarboxylic acid esters such as phthalic acid esters. Among

them, aromatic polycarboxylic acid esters are preferable, and phthalic acid esters are more preferable. The phthalic acid esters are preferably alkyl phthalates such as ethyl phthalate, n-butyl phthalate, isobutyl phthalate, hexyl phthalate, and heptyl phthalate, and diisobutyl phthalate is particularly preferable.

Specific examples of the polyether compounds include compounds represented by the following chemical formula (1):

[Chem. 2]

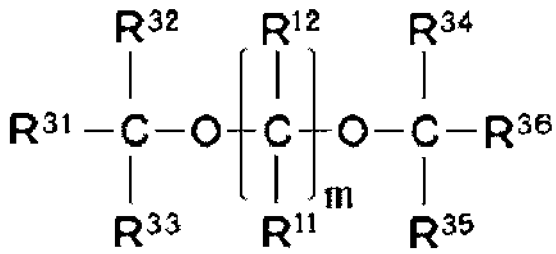

... (1)

wherein m is an integer of 1≤m≤10 and more preferably an integer of 3≤m≤10; and $R^{11}$ to $R^{36}$ are each independently a hydrogen atom or a substituent having at least one element selected from carbon, hydrogen, oxygen, fluorine, chlorine, bromine, iodine, nitrogen, sulfur, phosphorus, boron, and silicon. When m is 2 or more, a plurality of $R^{11}$ and $R^{12}$ may be the same or different. Any $R^{11}$ to $R^{36}$, and preferably $R^{11}$ and $R^{12}$, may together form a ring other than a benzene ring.

Specific examples of such compounds include monosubstituted dialkoxypropanes such as 2-isopropyl-1,3-dimethoxypropane, 2-s-butyl-1,3-dimethoxypropane, and 2-cumyl-1,3-dimethoxypropane; disubstituted dialkoxypropanes such as 2-isopropyl-2-isobutyl-1,3-dimethoxypropane, 2,2-dicyclohexyl-1,3-dimethoxypropane, 2-methyl-2-isopropyl-1,3-dimethoxypropane, 2-methyl-2-cyclohexyl-1,3-dimethoxypropane, 2-methyl-2-isobutyl-1,3-dimethoxypropane, 2,2-diisobutyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2,2-di-s-butyl-1,3-dimethoxypropane, 2,2-dineopentyl-1,3-dimethoxypropane, 2-isopropyl-2-isopentyl-1,3-dimethoxypropane, and 2-cyclohexyl-2-cyclohexylmethyl-1,3-dimethoxypropane; dialkoxyalkanes such as 2,3-dicyclohexyl-1,4-diethoxybutane, 2,3-dicyclohexyl-1,4-diethoxybutane, 2,3-diisopropyl-1,4-diethoxybutane, 2,4-diphenyl-1,5-dimethoxypentane, 2,5-diphenyl-1,5-dimethoxyhexane, 2,4-diisopropyl-1,5-dimethoxypentane, 2,4-diisobutyl-1,5-dimethoxypentane, and 2,4-diisoamyl-1,5-dimethoxypentane; and trialkoxyalkanes such as 2-methyl-2-methoxymethyl-1,3-dimethoxypropane, 2-cyclohexyl-2-ethoxymethyl-1,3-diethoxypropane, and 2-cyclohexyl-2-methoxymethyl-1,3-dimethoxypropane. One of polyether compounds may be used singly, or two or more may be used in combination. Among them, 1,3-diethers are preferable, and 2-isopropyl-2-isobutyl-1,3-dimethoxypropane, 2,2-diisobutyl-1,3-dimethoxypropane, 2-isopropyl-2-isopentyl-1,3-dimethoxypropane, 2,2-dicyclohexyl-1,3-dimethoxypropane, and 2,2-bis(cyclohexylmethyl) 1,3-dimethoxypropane are particularly preferable.

In the solid titanium catalyst component (I), halogen/titanium (an atomic ratio) (i.e., the number of moles of halogen atoms/the number of moles of titanium atoms) is 2 to 100, and preferably 4 to 90, the electron donor component (1)/titanium atoms (a molar ratio) is 0 to 100, and preferably 0 to 10, the electron donor component (2)/titanium atoms (a molar ratio) is 0 to 100, and preferably 0 to 10. Magnesium/titanium (an atomic ratio) (i.e., the number of moles of magnesium atoms/the number of moles of titanium atoms) is 2 to 100, and preferably 4 to 50.

For example, the conditions described in, for example, EP585869A1 or JPH5(1993)-170843A can be suitably used as the more specific preparation conditions of the solid titanium catalyst component (I), except for using the electron donor component (2).

[Organometallic compound catalyst component (II)]

The organometallic compound catalyst component (II) is a component containing a metal element selected from Group 1, Group 2, and Group 13 of the periodic table. For example, a compound containing a Group 13 metal (such as an organoaluminum compound), an alkyl complex compound of a Group 1 metal and aluminum, or an organometallic compound of a Group 2 metal can be used. Among them, an organoaluminum compound is preferable.

Specific suitable examples of the organometallic compound catalyst component (II) include organometallic compound catalyst components described in known documents such as the aforementioned EP585869A1.

In addition to the electron donor component (1) and the electron donor component (2) described above, a known electron donor component (3) may be used in combination, as long as the object of the present invention is not impaired.

The electron donor component (3) is preferably an organosilicon compound. The organosilicon compound is,

for example, a compound represented by the following formula.

$$R_nSi(OR')_{4-n}$$

wherein R and R' are hydrocarbon groups, and n is an integer satisfying 0<n<4.

Specifically, as the organosilicon compound represented by the above formula, for example, diisopropyldimethoxysilane, t-butylmethyldimethoxysilane, t-butylmethyldiethoxysilane, t-amylmethyldiethoxysilane, dicyclohexyldimethoxysilane, cyclohexylmethyldimethoxysilane, cyclohexylmethyldiethoxysilane, vinyltrimethoxysilane, vinyltriethoxysilane, t-butyltriethoxysilane, phenyltriethoxysilane, diphenyldimethoxysilane, cyclohexyltrimethoxysilane, cyclopentyltrimethoxysilane, 2-methylcyclopentyltrimethoxysilane, cyclopentyltriethoxysilane, dicyclopentyldimethoxysilane, dicyclopentyldiethoxysilane, tricyclopentylmethoxysilane, dicyclopentylmethylmethoxysilane, dicyclopentylethylmethoxysilane, or cyclopentyldimethylethoxysilane is used. Among them, vinyl triethoxysilane, diphenyldimethoxysilane, dicyclohexyldimethoxysilane, cyclohexylmethyldimethoxysilane, or dicyclopentyldimethoxysilane is preferable.

Also, silane compounds represented by the following formula as described in WO2004/016662 are preferable examples of the organosilicon compound:

$$Si(OR^a)_3(NR^bR^c)$$

wherein $R^a$ is a hydrocarbon group having 1 to 6 carbon atoms. For example, $R^a$ is an unsaturated or saturated aliphatic hydrocarbon group having 1 to 6 carbon atoms, and in particular, a hydrocarbon group having 2 to 6 carbon atoms is preferable. Specific examples include a methyl group, an ethyl group, a n-propyl group, an iso-propyl group, a n-butyl group, an iso-butyl group, a sec-butyl group, a n-pentyl group, an iso-pentyl group, a cyclopentyl group, a n-hexyl group, and a cyclohexyl group. Among them, an ethyl group is particularly preferable.

$R^b$ is a hydrocarbon group having 1 to 12 carbon atoms or hydrogen. For example, $R^b$ is an unsaturated or saturated aliphatic hydrocarbon group having 1 to 12 carbon atoms or hydrogen. Specific examples include a hydrogen atom, a methyl group, an ethyl group, a n-propyl group, an iso-propyl group, a n-butyl group, an iso-butyl group, a sec-butyl group, a n-pentyl group, an iso-pentyl group, a cyclopentyl group, a n-hexyl group, a cyclohexyl group, and an octyl group. Among them, an ethyl group is particularly preferable.

$R^c$ is a hydrocarbon group having 1 to 12 carbon atoms. For example, $R^c$ is an unsaturated or saturated aliphatic hydrocarbon group having 1 to 12 carbon atoms. Specific examples include a methyl group, an ethyl group, a n-propyl group, an iso-propyl group, a n-butyl group, an iso-butyl group, a sec-butyl group, a n-pentyl group, an iso-pentyl group, a cyclopentyl group, a n-hexyl group, a cyclohexyl group, and an octyl group. Among them, an ethyl group is particularly preferable.

Specific examples of the organosilicon compound represented by the above formula include dimethylaminotriethoxysilane, diethylaminotriethoxysilane, diethylaminotrimethoxysilane, diethylaminotri-n-propoxysilane, di-n-propylaminotriethoxysilane, methyl-n-propylaminotriethoxysilane, t-butylaminotriethoxysilane, ethyl-n-propylaminotriethoxysilane, ethyl-iso-propylaminotriethoxysilane, and methylethylaminotriethoxysilane.

Further, other examples of the organosilicon compound also include compounds represented by the following formula.

$$RNSi(OR^a)_3$$

In the above formula, RN is a cyclic amino group. Specific examples include a perhydroquinolino group, a perhydroisoquinolino group, a 1,2,3,4-tetrahydroquinolino group, a 1,2,3,4-tetrahydroisoquinolino group, and an octamethyleneimino group. $R^a$ is the same as above.

Specific examples of the organosilicon compound represented by the above formula include (perhydroquinolino)triethoxysilane, (perhydroisoquinolino)triethoxysilane, (1,2,3,4-tetrahydroquinolino)triethoxysilane, (1,2,3,4-tetrahydroisoquinolino)triethoxysilane, and octamethyleneiminotriethoxysilane.

Two or more of the organosilicon compounds described above may be used in combination.

[Polymerization]

A propylene/ethylene block copolymer which is a preferred aspect of the propylene-based polymer (A) can be produced by methods such as polymerizing propylene in the presence of the above-described catalyst for olefin polymerization and then copolymerizing propylene and ethylene, or polymerizing propylene in the presence of a prepolymerization catalyst obtained by prepolymerization and then copolymerizing propylene and ethylene.

Prepolymerization is carried out by prepolymerizing an olefin usually in an amount of 0.1 to 1000 g, preferably 0.3 to 500 g, and particularly preferably 1 to 200 g per gram of the catalyst for olefin polymerization. In prepolymerization,

the catalyst can be used in a concentration higher than the catalyst concentration in the system of polymerization.

The concentration of the solid titanium catalyst component (I) in prepolymerization, in terms of titanium atom, is usually 0.001 to 200 mmol, preferably 0.01 to 50 mmol, and more preferably 0.1 to 20 mmol per liter of a liquid medium.

The amount of the organometallic compound catalyst component (II) in prepolymerization may be an amount such that usually 0.1 to 1000 g and preferably 0.3 to 500 g of a polymer is produced per gram of the solid titanium catalyst component (I), and the amount is usually 0.1 to 300 mol, preferably 0.5 to 100 mol, and more preferably 1 to 50 mol per mole of titanium atoms in the solid titanium catalyst component (I).

In prepolymerization, the electron donor components can also be used as necessary, and, at this time, such components are usually 0.1 to 50 mol, preferably 0.5 to 30 mol, and more preferably 1 to 10 mol per mole of titanium atoms in the solid titanium catalyst component (I).

Prepolymerization can be carried out under mild conditions after adding an olefin and the above catalyst components to an inert hydrocarbon medium. In the case of using an inert hydrocarbon medium, prepolymerization is preferably carried out in a batch-wise manner.

Specific examples of the inert hydrocarbon medium include aliphatic hydrocarbons such as propane, butane, pentane, hexane, heptane, octane, decane, dodecane, and kerosene; alicyclic hydrocarbons such as cyclopentane, methylcyclopentane, cyclohexane, cycloheptane, methylcycloheptane, and cyclooctane; aromatic hydrocarbons such as benzene, toluene, and xylene; halogenated hydrocarbons such as ethylene chloride and chlorobenzene; and mixtures thereof. Among them, aliphatic hydrocarbons are preferable.

Prepolymerization can also be carried out by using an olefin itself as the solvent. In addition, prepolymerization can also be performed in a state substantially free from a solvent. In this case, prepolymerization is preferably carried out in a continuous manner.

The olefin used in prepolymerization may be the same as or different from the olefin used in polymerization that will be described below. As the olefin, in particular, propylene is preferable.

The temperature upon prepolymerization is usually -20 to 100°C, preferably -20 to 80°C, and more preferably 0 to 40°C.

Next, polymerization will now be described that is performed after conducting the above-described prepolymerization or without conducting prepolymerization.

Polymerization can be divided into a step of producing a propylene homopolymer component and a step of producing a propylene-ethylene copolymer component.

Polymerization (and prepolymerization) can be conducted by any of the liquid-phase polymerization methods such as bulk polymerization, solution polymerization, and suspension polymerization, and the gas-phase polymerization methods. The step of producing the propylene homopolymer component is preferably a liquid-phase polymerization method such as bulk polymerization or suspension polymerization, or a gas-phase polymerization method. The step of producing the propylene-ethylene copolymer component is preferably a liquid-phase polymerization method such as bulk polymerization or suspension polymerization, or a gas-phase polymerization method, and more preferably a gas-phase polymerization method.

When polymerization takes the reaction form of slurry polymerization, an inert hydrocarbon as used during the above-described prepolymerization can be used as a reaction solvent, and an olefin that is liquid at the reaction temperature and pressure, can also be used.

In polymerization, the solid titanium catalyst component (I) is used in an amount, in terms of titanium atom, of usually 0.0001 to 0.5 mmol and preferably 0.005 to 0.1 mmol per liter of the polymerization volume. The organometallic compound catalyst component (II) is used in an amount of usually 1 to 2000 mol, and preferably 5 to 500 mol per mole of titanium atoms in the prepolymerization catalyst component in the polymerization system. When the electron donor component is used, it is used in an amount of usually 0.001 to 50 mol, preferably 0.01 to 30 mol, and more preferably 0.05 to 20 mol, per mole of the organometallic compound catalyst component (II).

The polymerization in the presence of hydrogen makes it possible to regulate (reduce) the molecular weight of the resulting polymer, and provides a polymer having a high melt flow rate (MFR). The amount of hydrogen required to regulate the molecular weight may be appropriately regulated because it varies according to the kind of production process to be used, the polymerization temperature, and the pressure.

In the step of producing the propylene homopolymer component, the MFR can be regulated by regulating the polymerization temperature and the amount of hydrogen. Also, in the step of producing the propylene-ethylene copolymer component, the intrinsic viscosity can be regulated by regulating the polymerization temperature, the pressure, and the amount of hydrogen.

In polymerization, the olefin polymerization temperature is usually 0 to 200°C, preferably 30 to 100°C, and more preferably 50 to 90°C. The pressure (gauge pressure) is usually ordinary pressure to 100 $kgf/cm^2$ (9.8 MPa), and preferably 2 to 50 $kgf/cm^2$ (0.20 to 4.9 MPa).

In the production of the propylene/ethylene block copolymer which is a preferred aspect of the propylene-based polymer (A), polymerization can be carried out by any of batch, semicontinuous, and continuous methods. Further, as

for the reactor shape, any of tubular and tank reactors can be used. Further, polymerization can be carried out at two or more divided stages by changing the reaction conditions. In this case, a tubular reactor and a tank reactor can be combined.

To obtain the propylene/ethylene copolymer portion in the propylene/ethylene block copolymer which is a preferred aspect of the propylene-based polymer (A), the ethylene/(ethylene + propylene) gas ratio is controlled in the polymerization step 2 described below. The ethylene/(ethylene + propylene) gas ratio is usually 5 to 80 mol%, preferably 10 to 70 mol%, and more preferably 15 to 60 mol%.

As described above, the decane-insoluble portion (a2) of the propylene/ethylene block copolymer is mainly constituted of the propylene homopolymer component. On the other hand, the decane-soluble portion (a1) is mainly constituted of the ethylene/propylene copolymer component which is a rubber component. For example, by continuously conducting the following two polymerization steps 1 and 2, the propylene/ethylene block copolymer which is a preferred aspect of the propylene-based polymer (A) can be obtained.

(Polymerization step 1)

A step of polymerizing propylene in the presence of a solid titanium catalyst component to produce a propylene homopolymer component (propylene homopolymer production step).

(Polymerization step 2)

A step of copolymerizing propylene and ethylene in the presence of a solid titanium catalyst component to produce an ethylene/propylene copolymer component (copolymer rubber production step).

In particular, it is more preferable that the polymerization step 1 be carried out at a former stage and the polymerization step 2 be carried out at a latter stage. Each of the polymerization steps 1 and 2 can be carried out by using two or more polymerization tanks. The content of the decane-soluble portion (a1) can be regulated by the polymerization time (retention time) of the polymerization step 1 and the polymerization step 2. The polymerization step 1 at the former stage may be carried out using polymerizers arranged in series over two stages or more. In this case, the ratio of propylene to hydrogen in each stage may be different in each polymerizer.

The propylene-based polymer (A) used in the present invention may contain one or more biomass-derived monomers. Monomers of the same kind that constitute the polymer may be only a biomass-derived monomer, or may contain both a biomass-derived monomer and a fossil fuel derived monomer. The biomass-derived monomer is a monomer obtained by using any renewable natural raw materials, for example, derived from plants or animals including fungi, yeast, algae, and bacteria, and residues thereof as the raw material. It contains $^{14}C$ isotopes in a proportion of about $10^{-12}$ as carbon, and has a biomass carbon concentration (pMC) measured according to ASTM D 6866 of about 100 (pMC). The biomass-derived monomer can be obtained by conventionally known methods. The propylene-based polymer (A) used in the present invention preferably contains the biomass-derived monomer, in view of reducing the environmental load. As long as the polymer production conditions such as the catalyst for polymerization and the polymerization temperature are equivalent, even when the raw material olefin contains a biomass-derived olefin, the molecular structure except that $^{14}C$ isotopes are contained in a proportion of about $10^{-12}$ is equivalent to that of a propylene-based polymer composed of a fossil fuel-derived monomer. Thus, the performance is considered to be not different from each other.

The propylene-based polymer (A) according to the present invention may contain chemical recycle-derived propylene. The propylene constituting the polymer may be only chemical recycle-derived propylene, or may contain chemical recycle-derived propylene and fossil fuel-derived propylene and/or biomass-derived propylene. The chemical recycle-derived propylene is obtained by conventionally known methods. The propylene-based polymer (A) according to the present invention preferably contains chemical recycle-derived propylene, in view of reducing the environmental load (mainly, lowering wastes). Even when the raw material monomer contains a chemical recycle-derived monomer, the chemical recycle-derived monomer, which is a monomer obtained by turning a polymer such as waste plastic to a monomer unit such as propylene by, for example, depolymerization or thermal decomposition and produced using the monomer as the raw material, has a molecular structure equivalent to that of a propylene homopolymer composed of a fossil fuel-derived monomer, as long as the polymer production conditions such as the catalyst for polymerization, the polymerization process, and the polymerization temperature are equivalent. Thus, the performance is considered to be not different from each other.

<Propylene homopolymer (B)>

The propylene homopolymer (B) used in the present invention is a propylene homopolymer having a melt flow rate (230°C, 2.16 kg load) of 10 to 500 g/10 min.

The propylene homopolymer (B) may be a polymer obtained by polymerizing substantially only propylene. For example, a homopolymer obtained by polymerizing only propylene, or a crystalline polymer obtained by copolymerizing propylene and 6 mol% or less, and preferably 3 mol% or less of another $\alpha$-olefin can be used. Among them, a homopolymer obtained by polymerizing only propylene is preferable.

The propylene homopolymer (B) can be produced by polymerizing monomers mainly containing propylene by a known method. For example, the propylene homopolymer (B) can be obtained by polymerizing monomers mainly containing propylene in the presence of the above-described catalyst for olefin polymerization containing the solid titanium catalyst component (I) and the organometallic compound catalyst component (II), or a combined catalyst of titanium trichloride and an alkylaluminum compound, which is usually referred to as a Ziegler-Natta catalyst. The polymerization reaction may be carried out in a continuous manner or in a batch-wise manner. Moreover, the propylene homopolymer (B) can be suitably produced by, for example, carrying out only the above-described polymerization step 1.

In the polymerization reaction, the polymerization temperature is usually 0 to 200°C, preferably 30 to 100°C, and more preferably 50 to 90°C. The pressure (gauge pressure) is usually ordinary pressure to 100 kgf/cm$^2$ (9.8 MPa), and preferably 2 to 50 kgf/cm$^2$ (0.20 to 4.9 MPa).

The melt flow rate (230°C, 2.16 kg load) of the propylene homopolymer (B) is 10 to 500 g/10 min, preferably 10 to 300 g/10 min, and more preferably 20 to 250 g/10 min.

The propylene homopolymer (B) may be a single polymer or may be any combination of two or more propylene homopolymers within a range satisfying the above melt flow rate as a whole.

The propylene homopolymer (B) used in the present invention may contain biomass-derived propylene. Propylene that constitutes the polymer may be only biomass-derived propylene, or may contain both biomass-derived propylene and fossil fuel-derived propylene. The biomass-derived propylene is a monomer obtained by using any renewable natural raw materials, for example, derived from plants or animals including fungi, yeast, algae, and bacteria, and residues thereof as the raw material. It contains 14C isotopes in a proportion of about $10^{-12}$ as carbon, and has a biomass carbon concentration (pMC) measured according to ASTM D 6866 of about 100 (pMC). The biomass-derived propylene can be obtained by conventionally known methods. The propylene homopolymer (B) used in the present invention preferably contains the biomass-derived monomer, in view of reducing the environmental load. As long as the polymer production conditions such as the catalyst for polymerization and the polymerization temperature are equivalent, even when the raw material propylene contains biomass-derived propylene, the molecular structure except that 14C isotopes are contained in a proportion of about $10^{-12}$ is equivalent to that of a propylene homopolymer composed of fossil fuel-derived propylene. Thus, the performance is considered to be not different from each other.

The propylene homopolymer (B) used in the present invention may contain chemical recycle-derived propylene as the monomer, as in the above-described propylene-based polymer (A). That is, the propylene constituting the polymer may be only chemical recycle-derived propylene, or may contain chemical recycle-derived propylene and fossil fuel-derived propylene and/or biomass-derived propylene.

<Ethylene/$\alpha$-olefin copolymer (C)>

The ethylene/$\alpha$-olefin copolymer (C) used in the present invention is a random copolymer of ethylene and an $\alpha$-olefin having 4 to 8 carbon atoms, and is an ethylene/$\alpha$-olefin copolymer having a density of 0.850 to 0.880 g/cm$^3$, a melt flow rate (230°C, 2.16 kg load) of 0.5 to 30 g/10 min, and a melting point peak of 110°C or more. The ethylene/$\alpha$-olefin copolymer (C) is expected to contribute to the improvement in the dimensional stability (the reduction in the coefficient of linear expansion) of the molded body (i) and the layered structure having the molded body (i) by a synergistic effect with other components, and also contributes to the improvement in other physical properties, resulting in an expression of a high physical-property balance in the molded body.

The $\alpha$-olefin having 4 to 8 carbon atoms constituting the ethylene/$\alpha$-olefin copolymer (C) is preferably 1-butene, 1-hexene, or 1-octene. One of $\alpha$-olefins may be used singly, or two or more may be used in combination. The ethylene/$\alpha$-olefin copolymer (C) is particularly preferably an ethyleneoctene copolymer or an ethylene-butene copolymer.

The melt flow rate (230°C, 2.16 kg load) of the ethylene/$\alpha$-olefin copolymer (C) is 0.5 to 30 g/10 min, preferably 1 to 25 g/10 min, and more preferably 2 to 20 g/10 min.

When the melt flow rate (230°C, 2.16 kg load) of the ethylene/$\alpha$-olefin copolymer (C) is 0.5 g/10 min or more, the reduction in the flowability of the polypropylene-based resin composition and the poor dispersion during kneading tend to hardly occur, and the reduction in physical properties such as impact resistance and the deterioration of the surface appearance of the molded body tend to be hardly caused. In addition, when the melt flow rate (230°C, 2.16 kg load) is 30 g/10 min or less, the molded body (i) and the layered structure having the molded body (i) tend to have sufficient impact resistance.

The density of the ethylene/$\alpha$-olefin copolymer (C) is 0.850 to 0.880 g/cm$^3$, and preferably 0.855 to 0.875 g/cm$^3$.

The melting point peak of the ethylene/$\alpha$-olefin copolymer (C) is 110°C or more, and preferably 110 to 130°C. The melting point peak refers to a value determined by a differential scanning calorimeter (DSC). Specifically, the

temperature at the maximum peak position when an endothermic curve is determined by a differential scanning calorimeter (DSC) can be determined as the melting point peak (Tm). When the melting point peak of the ethylene/α-olefin copolymer (C) satisfies the above high temperature range, the layered structure of the present invention in which the molded body (i) composed of the polypropylene-based resin composition containing the ethylene/α-olefin copolymer (C) and the resin cured layer (ii) are layered has excellent adhesion strength.

<Inorganic filler (D)>

As the inorganic filler (D) used in the present invention, a known inorganic filler can be used, and examples include, but are not particularly limited to, talc, calcium carbonate, natural mica, synthetic mica, wollastonite, and montmorillonite. The inorganic filler (D) may be used singly, or two or more may be used in combination. Among them, talc is preferable. By using such an inorganic filler (D), mechanical properties of the molded body (i) and the layered structure having the molded body (i) are improved.

The inorganic filler (D) is not particularly limited as long as it can be dispersed in the resin composition, and the average particle size thereof is, for example, 1 μm to 20 pm, and preferably more than 3.0 μm and 10.0 μm or less, preferably 3.0 μm to 8.0 μm, and more preferably 3.0 μm to 7.0 μm. The average particle size is a value measured by a laser diffraction method. Specifically, the average particle size is a particle size at an integrated value of 50% in the particle size distribution determined with a particle size distribution meter such as a laser diffraction and scattering particle size distribution meter. Examples of the measuring apparatus include MT3300EXII manufactured by Microtrac and LA-920 manufactured by Horiba, Ltd.

The aspect ratio of the inorganic filler (D) is not particularly limited, but is usually 3 or more and less than 15, preferably 4 to 13, and more preferably 5 to 11. Typically, the aspect ratio refers to a value representing the ratio of the major axis to the thickness of the filler, or a value representing the ratio of the long side to the short side. When the aspect ratio is 3 or more, the rigidity and the dimensional stability of the molded body tend to be hardly reduced. When the aspect ratio is less than 15, the balance of the mechanical properties tends to be hardly reduced, and further, the impact strength also tends to be hardly reduced. Specifically, the aspect ratio is a value determined as follows: powders are photographed using an electron microscope, the major axis and the thickness of the powders are measured, the average values thereof are determined, thereby determining the ratio of the average particle size/the average thickness.

The inorganic filler (D) contributes to the improvement in the dimensional stability (the reduction in the coefficient of linear expansion) of the molded body (i) and the layered structure having the molded body (i), and also contributes to the improvement of the mechanical properties such as rigidity and impact strength. It is suitable that the inorganic filler (D) has the above-described average particle size (and aspect ratio) because particularly excellent dimensional stability is obtained and a high physical-property balance excellent in rigidity and impact strength is easily expressed by a synergistic effect with other components.

As the inorganic filler (D), inorganic fillers in any form, such as granules, plates, rods, fiber, and whisker can be used. In addition, inorganic fillers commercially available as the filler for polymer can also be used. Further, not only typical inorganic fillers in the form of powder or roving, but also those in the form of, for example, chopped strand, compressed bulk, pellet (granulation), and granulate, having increased convenience of handling can be used. Among them, powder, compressed bulk, and granulate are preferable.

The inorganic filler (D) may be a mixture of two or more kinds of shapes of inorganic fillers.

The method for producing the inorganic filler (D) is not particularly limited, and can be produced by various known methods. For example, when talc is used as the inorganic filler (D), talc having a specific average particle size and aspect ratio can be produced by pulverization or granulation. Specific examples include a method of pulverizing talc raw stones with an impact pulverizer or a micron mill pulverizer, and a method of further pulverizing the pulverized talc with a jet mill and classifying and regulating the pulverized talc with, for example, a cyclone or a micron separator. The aspect ratio and average particle size of talc can be appropriately regulated by the pulverizing apparatus and pulverizing time, and talc having a controlled shape can be obtained by performing classification as necessary.

As the inorganic filler (D), those obtained by pulverizing raw stones may be directly used, or those in which at least part is subjected to surface treatment may be used. As for the surface treatment, for example, various surface treatment agents such as an organic titanate-based coupling agent, an organic silane coupling agent, a modified polyolefin obtained by grafting an unsaturated carboxylic acid or an anhydride thereof, fatty acid, fatty acid metal salt, and fatty acid ester can be used. One of the surface treatment agents may be used singly, or two or more may be used in combination.

Into the polypropylene-based resin composition according to the present invention, as necessary, other additives such as a nucleating agent, a heat-resistant stabilizer, an antistatic agent, a weathering stabilizer, a light-resistant stabilizer, an anti-aging agent, an antioxidant, a fatty acid metal salt, a softener, a dispersant, a filler, a colorant, a lubricant, and a pigment can be blended as long as the object of the present invention is not impaired. The additives may be mixed in any order; the additives may be mixed simultaneously, or a multi-stage mixing method in which some

components are mixed and then the other components are mixed may be used.

<Polypropylene-based resin composition>

The polypropylene-based resin composition according to the present invention contains 5 to 47 parts by mass of the propylene-based polymer (A), 20 to 30 parts by mass of the propylene homopolymer (B), 23 to 30 parts by mass of the ethylene/α-olefin copolymer (C), and 30 to 40 parts by mass of the inorganic filler (D), provided that the total amount of the components (A) to (D) is 100 parts by mass.

The polypropylene-based resin composition according to the present invention preferably contains 7 to 35 parts by mass of the propylene-based polymer (A), 20 to 30 parts by mass of the propylene homopolymer (B), 23 to 28 parts by mass of the ethylene/α-olefin copolymer (C), and 32 to 40 parts by mass of the inorganic filler (D), provided that the total amount of the components (A) to (D) is 100 parts by mass.

The polypropylene-based resin composition according to the present invention more preferably contains 8 to 28 parts by mass of the propylene-based polymer (A), 23 to 30 parts by mass of the propylene homopolymer (B), 24 to 28 parts by mass of the ethylene/α-olefin copolymer (C), and 33 to 38 parts by mass of the inorganic filler (D), provided that the total amount of the components (A) to (D) is 100 parts by mass.

The polypropylene-based resin composition according to the present invention particularly preferably contains 10 to 22 parts by mass of the propylene-based polymer (A), 25 to 30 parts by mass of the propylene homopolymer (B), 24 to 27 parts by mass of the ethylene/α-olefin copolymer (C), and 34 to 37 parts by mass of the inorganic filler (D), provided that the total amount of the components (A) to (D) is 100 parts by mass.

The polypropylene-based resin composition according to the present invention can be produced by blending the components (A) to (D) mentioned above and, as necessary, optional components such as additives. Each component may be sequentially blended in any order or may be mixed simultaneously. Moreover, a multi-stage mixing method in which some components are mixed and then the other components are mixed may be employed. Specifically, the polypropylene-based resin composition according to the present invention can be produced by, for example, blending the components (A) to (C) which are the resin components (organic compound components) in the polypropylene-based resin composition first, and then adding the component (D) and, as necessary, adding optional components such as additives.

Examples of the method for blending each component include a method for simultaneously or sequentially mixing or melt-kneading each component using a mixing apparatus such as a Banbury mixer, a single-screw extruder, a twin-screw extruder, or high-speed twin-screw extruder.

The melt flow rate (230°C, 2.16 kg load) according to the polypropylene-based resin composition of the present invention is usually 23 g/10 min or more, preferably more than 23 g/10 min, and 50 g/10 min or less. When the melt flow rate is set to such a range, the moldability is good, and the deterioration of the coating appearance after injection molding can be suppressed.

<Molded Body (i)>

The molded body (i) according to the present invention is a molded body obtained from the polypropylene-based resin composition according to the present invention mentioned above. The molded body (i) can be obtained by appropriately molding the polypropylene-based resin composition according to the present invention. The molding method of the polypropylene-based resin composition is not particularly limited, and various known methods can be used as the molding method of the resin composition. As the molding method of the molded body (i), in particular, injection molding or press molding is preferable. The molded body (i) obtained from the polypropylene-based resin composition according to the present invention has a small dimensional change due to a temperature change and excellent dimensional stability, and the layered structure having the molded body (i) also has a small dimensional change due to a temperature change and excellent dimensional stability.

[Resin Cured Layer (ii)]

The resin cured layer (ii) according to the present invention is a layer of a resin cured product containing a curable resin (E) having a urethane bond.

The curable resin (E) used in the present invention is a curable resin having a urethane bond. As such a curable resin (E), a known curable resin having a urethane bond can be used without limitation, and specific examples include a polyurethane resin. The curable resin (E) having a urethane bond may include, for example, a urea bond and a burette bond, in addition to the urethane bond. In the production of the resin cured layer (ii) containing the curable resin (E) having a urethane bond, a curing agent may be used as necessary.

As the polyurethane resin used as the curable resin (E) having a urethane bond, a known polyurethane resin

can be used. For example, a polymer obtained by reacting a polyfunctional isocyanate or a derivative thereof with a polyol or a derivative thereof and/or a polyester or a derivative thereof can be used.

Examples of the polyfunctional isocyanate or a derivative thereof to be a raw material of the polyurethane resin include polyfunctional isocyanates such as tolylene diisocyanate (TDI), 4,4'-diphenylmethane diisocyanate (MDI), isophorone diisocyanate and norbornane diisocyanate, and derivatives such as block derivatives or isocyanurate derivatives thereof. These may be used singly, or two or more may be used in combination.

Examples of the polyol or a derivative thereof to be a raw material of the polyurethane resin include polypropylene glycol having a molecular weight of 500 to 100000, a polyethylene glycol-polypropylene glycol block copolymer, and polypropylene glycol in which the terminal is amine. These may be used singly, or two or more may be used in combination.

Examples of the polyester or a derivative thereof to be a raw material of the polyurethane resin include polyethylene terephthalate, polyethylene isophthalate, polybutylene terephthalate, and polybutylene isophthalate, and reactants of these polyesters with polyethylene glycol or polypropylene glycol. These may be used singly, or two or more may be used in combination.

To obtain a polyurethane resin from a polyfunctional isocyanate and a polyol and/or a polyester, for example, the polyurethane resin can be obtained by mixing and stirring the materials in an equimolar amount or so that the amount of polyfunctional isocyanate is excess. In this case, a polymerization promoting agent, for example, an amine compound may be blended.

The resin cured layer (ii) according to the present invention may be produced by applying and curing a composition containing the raw materials of the polyurethane resin mentioned above, such as an adhesive or a coating agent, on the molded body (i), or may be produced by applying and curing the composition on another member to be bonded with the molded body (i). In addition, a multilayer body composed of the molded body (i), the resin cured layer (ii), and another member can be produced by applying a composition containing the raw materials of the polyurethane resin mentioned above on the molded body (i) and bonding and curing another member to be bonded to the molded body (i) before the composition is cured, or can be produced by applying the composition on a member other than the molded body (i) and bonding and curing the molded body (i) thereto before the composition is cured.

The resin cured layer (ii) according to the present invention may be obtained, for example, by forming and curing a layer composed of a composition in which a first part containing the curable resin (E) having a urethane bond and a second part containing a curing agent are mixed, may be obtained by forming and curing a layer composed of a moisture-curable composition containing the curable resin (E) having a urethane bond, or may be obtained by forming and heat-curing a layer containing the curable resin (E) having a urethane bond that is a thermosetting resin.

The resin cured layer (ii) according to the present invention is preferably a cured product of an adhesive containing a polyurethane resin or an adhesive that forms a urethane bond. Examples of the adhesive include a two part ordinary temperature curable adhesive, a one part moisture curable adhesive, and a thermosetting adhesive. The resin cured layer obtained by curing such an adhesive contains a curable resin having a urethane bond.

As the adhesive containing a polyurethane resin or the adhesive that forms a urethane bond, a known adhesive can be used. A two part curable or one part moisture curable adhesive or an aqueous or aqueous emulsion adhesive is preferable, and specific examples thereof include two part curable or one part moisture curable adhesives and aqueous or aqueous emulsion adhesives that contain a polyurethane resin such as urethane resin, acrylic resin, urethane/acrylic resin, and epoxy resin, and urethane resin-based, acrylic resin-based, urethane/acrylic resin-based, and epoxy resin-based adhesives that form a urethane bond after application.

As the adhesive, a main agent (a composition containing an isocyanate compound) and a curing agent (a composition containing an active hydrogen-containing compound such as polyol) can be used in combination. Examples of such a main agent include isocyanate-based and polyisocyanate-based compositions, and examples of the curing agent include polyol-based and polyamine-based compounds. In some cases, the curing agent is blended in an adhesive by being subjected to latent treatment, but is typically used by being mixed with an adhesive at a specific ratio immediately before application. The main agent is preferably an isocyanate-based or polyisocyanate-based composition. As the adhesive, a commercially available polyurethane-based adhesive can also be used.

Among such adhesives, an adhesive containing a urethane prepolymer and an isocyanate derivative is preferable, and a urethane-based adhesive containing a urethane prepolymer having a polyether skeleton and an aliphatic isocyanate derivative is more preferable. That is, the resin cured layer containing the curable resin (E) having a urethane bond is preferably a cured product of a urethane-based adhesive containing a urethane prepolymer having a polyether skeleton and an aliphatic isocyanate derivative.

Urethane prepolymer

The urethane prepolymer can be obtained by reacting a polyisocyanate compound having two or more isocyanate groups in a molecule and an active hydrogen compound having two or more active hydrogens that react with isocyanate groups.

Examples of the polyisocyanate compound to be used in the preparation of the urethane prepolymer include aliphatic polyisocyanates such as hexamethylene diisocyanate, 1,5-pentamethylene diisocyanate, 2,2,4-trimethylhexamethylene diisocyanate, and lysine methylester diisocyanate; cycloaliphatic polyisocyanates such as 1,4-cyclohexane diisocyanate, isophorone diisocyanate, 4,4'-dicyclohexylmethane diisocyanate, hydrogenated tolylene diisocyanate, norbornenediisocyanate, hydrogenated m-xylylene diisocyanate, and hydrogenated p-xylylene diisocyanate; aromatic polyisocyanates such as aromatic diisocyanates, such as p-phenylene diisocyanate, 2,4-toluene diisocyanate, 2,6-toluene diisocyanate, 3,3'-dimethyldiphenyl-4,4'-diisocyanate, 4,4'-diphenylmethane diisocyanate, naphthalene diisocyanate, m-xylylene diisocyanate, and tolidine diisocyanate; and those obtained by modifying the above polyisocyanates with carbodiimide or isocyanurate, and they can be used singly or in a mixture of two or more thereof. Among these, aromatic isocyanate is more preferably used from the viewpoint of further excellent adhesiveness and excellent curability.
As the active hydrogen compound to be used in the preparation of the urethane prepolymer, a polyol compound having two or more alcoholic hydroxy groups in a molecule, such as polyether polyol, polyester polyol, or other polyols, can be used singly or in combination of two or more thereof, and polyether polyol is preferably used. The urethane prepolymer obtained by using polyether polyol as the active hydrogen compound has a polyether skeleton, so that the obtained adhesive is excellent in the adhesion performance with the molded body (i). The polyol compound preferably has a number average molecular weight of 100 to 50,000, in particular, 300 to 10,000.
Specific examples of the polyether polyol that is an active hydrogen compound suitably usable in the preparation of the urethane prepolymer include, in addition to polyoxyethylene glycol, polyoxypropylene glycol, polyoxyethylene oxypropylene glycol, polyoxytetramethylene glycol, and polyoxyhexamethylene glycol, random copolymers obtained by ring-opening polymerization of propylene oxide and/or ethylene oxide in the presence of one or two or more of low molecular weight active hydrogen compounds having two or more active hydrogens, such as diols such as bisphenol A, ethylene glycol, propylene glycol, butylene glycol, and 1,6-hexanediol; triols such as glycerin, trimethylol propane, and 1,2,6-hexanetriol; and amines such as ammonia, methylamine, ethylamine, propylamine, and butylamine.
The urethane prepolymer can be obtained by heating as necessary and reacting a polyol compound and a polyisocyanate compound in a ratio of more than 1 mole of isocyanate groups contained in the polyisocyanate compound relative to 1 mole of hydroxyl groups contained in the polyol compound, that is, with a chemical equivalent ratio (NCO/OH) of more than 1. Such a urethane prepolymer usually has an isocyanate group at the both terminals of its molecule. As the urethane prepolymer, one obtained by reacting the polyol compound and the polyisocyanate compound in a ratio of 1.5 to 20 in a chemical equivalent ratio (NCO/OH) of isocyanate groups contained in the polyisocyanate compound to hydroxyl groups contained in the polyol compound and exhibiting a liquid state at 23°C is more preferable in terms of workability and physical properties of the cured product. As the urethane prepolymer, a urethane prepolymer obtained by reacting polyether polyol and an aromatic polyisocyanate compound is preferable from the viewpoint of further excellent adhesiveness and excellent curability.

Isocyanate derivative

As the isocyanate derivative, an isocyanate derivative that functions as the main agent can be used without particular limitation. For example, isocyanates, diisocyanates, polyisocyanates, and derivatives thereof can be used, and specifically, the above-described polyfunctional isocyanate or a derivative thereof can be used.
The above isocyanate derivative is preferably a compound having an isocyanurate structure and an isocyanate group. A compound having an isocyanurate structure and an isocyanate group, in particular, a compound that is an aliphatic isocyanate derivative having an isocyanurate structure and an isocyanate group is preferably used as the isocyanate derivative, since it has high adhesion strength with the molded body (i).
The isocyanurate structure is a structure represented by the following formula (B1). The above aliphatic isocyanate derivative can have at least one isocyanurate structure described above per molecule, and in one preferred aspect, the above aliphatic isocyanate derivative has one isocyanurate structure described above.

[Chem. 3]

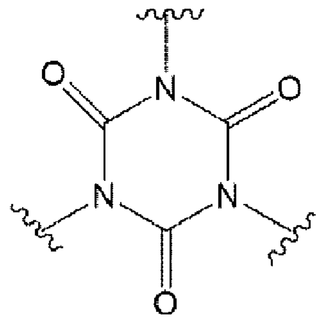

(B1)

The above isocyanate derivative can have at least one isocyanate group, preferably has a plurality of isocyanate groups, and more preferably has three or more isocyanate groups per molecule.

In the above isocyanate derivative, the above isocyanurate structure and the above isocyanate group can be directly bonded or bonded via a linking group, and in one preferred aspect, they are bonded via a linking group.

In the above isocyanate derivative, the above isocyanurate structure and the above isocyanate group can be directly bonded or bonded via a linking group, and in one preferred aspect, they are bonded via a linking group.

Examples of the above linking group include a hydrocarbon group optionally having a heteroatom. In one preferred aspect, the above hydrocarbon group is constituted only of carbon atoms and hydrogen atoms. Specific examples of the above hydrocarbon group include, but are not particularly limited to, an aliphatic hydrocarbon group, an aromatic hydrocarbon group, and a combination thereof. Among them, an aliphatic hydrocarbon group is preferable.

The above aliphatic hydrocarbon group may be any of linear, branched, cyclic, and a combination thereof. Specific examples of the above aliphatic hydrocarbon group include linear or branched aliphatic hydrocarbon groups. The above aliphatic hydrocarbon group is preferably a linear aliphatic hydrocarbon group, from the viewpoint of further excellent effects of the present invention. The above aliphatic hydrocarbon group preferably has 1 to 20 carbon atoms, more preferably 3 to 10 carbon atoms, and even more preferably 4 to 5 carbon atoms, from the viewpoint of further excellent effects of the present invention. The above aliphatic hydrocarbon group is preferably a methylene group, an ethylene group, an propylene group, a trimethylene group, a butylene group, a pentylene group, a hexylene group, a heptylene group, an octylene group, a nonylene group, or a decylene group, more preferably a butylene group, or a pentylene group, and even more preferably a pentylene group, from the viewpoint of further excellent effects of the present invention.

Specific examples of the heteroatom that may be included in the hydrocarbon group include, but are not particularly limited to, an oxygen atom, a nitrogen atom, a sulfur atom, and a halogen atom (such as a fluorine atom, a chlorine atom, or a bromine atom). The above heteroatom may be bonded to another heteroatom, a carbon atom, or a hydrogen atom to form a functional group.

The above isocyanate derivative is preferably a compound represented by the following formula (B2), from the viewpoint of further excellent effects of the present invention.

[Chem. 4]

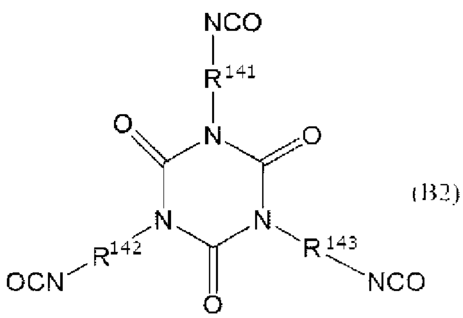

(B2)

wherein $R^{141}$, $R^{142}$, and $R^{143}$ each independently represent a hydrocarbon group optionally having a heteroatom. The hydrocarbon group such as $R^{141}$ optionally having a heteroatom is the same as above.

The above isocyanate derivative preferably contains an isocyanurate of aliphatic polyisocyanate described

below, more preferably an isocyanurate of pentamethylene diisocyanate (a compound represented by the following formula (B2-1)) and/or an isocyanurate of hexamethylene diisocyanate (a compound represented by the following formula (B2-2)), and even more preferably an isocyanurate of pentamethylene diisocyanate, from the viewpoint of further excellent effects of the present invention.

[Chem. 5]

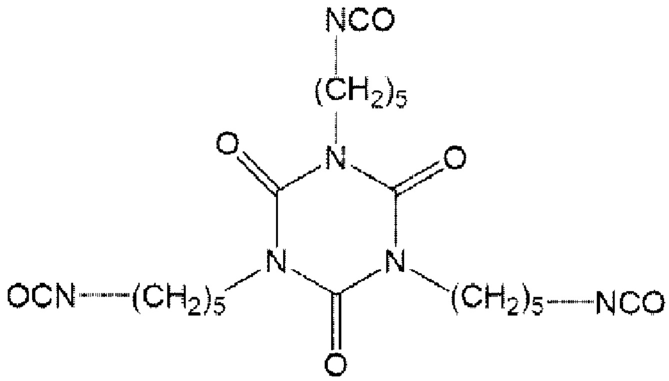

(B2-1)

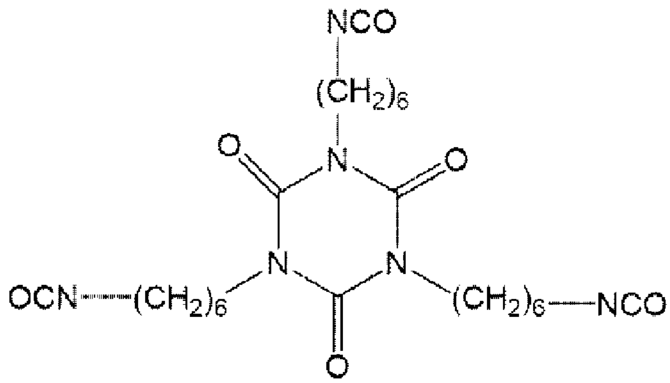

(B2-2)

The above isocyanate derivative may be, for example, constituted of a polyisocyanate compound. The above polyisocyanate compound is not particularly limited, as long as it is a compound in which a plurality of isocyanate groups are bonded to the above linking group. Among them, aliphatic polyisocyanate (a compound in which a plurality of isocyanate groups are bonded to the above aliphatic hydrocarbon group) is preferable.

Examples of the above isocyanate derivative include aliphatic diisocyanate such as pentamethylene diisocyanate (PDI) and hexamethylene diisocyanate (HDI). The polyisocyanate compound that may constitute the above isocyanate compound (B) may be a single polyisocyanate compound or a combination of two or more kinds thereof.

The above isocyanate derivative is preferably a compound represented by the above formula (B2-1) for the reason that further excellent effects of the present invention (initial adhesiveness and adhesion durability) can be obtained and the compound is easily added to the composition due to its low viscosity.

The content of the above isocyanate derivative is preferably 0.10 to 10.0% by mass, and more preferably 0.50 to 5.0% by mass based on the total amount of the composition of the present invention, from the viewpoint of further excellent effects of the present invention (in particular, adhesion durability).

Adduct

The adhesive containing a polyurethane resin or the adhesive that forms a urethane bond can contain an adduct of a compound represented by the following formula (X) (wherein $R^{37}$ and $R^{38}$ each independently represent a hydrocarbon group) and a phenolic compound. This adduct functions as an adhesion imparting agent in the adhesive containing a polyurethane resin or in the adhesive that forms a urethane bond.

[Chem. 6]

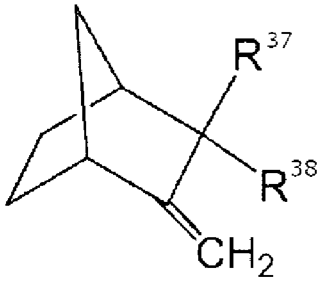

(X)

wherein $R^{37}$ and $R^{38}$ each independently represent a hydrocarbon group.

The hydrocarbon groups as $R^{37}$ and $R^{38}$ are not particularly limited. The above hydrocarbon group may have a heteroatom. In one preferred aspect, the above hydrocarbon group is constituted only of carbon atoms and hydrogen atoms. Specific examples of the above hydrocarbon group include, but are not particularly limited to, an aliphatic hydrocarbon group, an aromatic hydrocarbon group, and a combination thereof. Among them, an aliphatic hydrocarbon group is preferable.

The above aliphatic hydrocarbon group may be any of linear, branched, cyclic, and a combination thereof. Specific examples of the above aliphatic hydrocarbon group include linear or branched aliphatic hydrocarbon groups. The above aliphatic hydrocarbon group is preferably a linear aliphatic hydrocarbon group, from the viewpoint of further excellent effects of the present invention. The above aliphatic hydrocarbon group preferably has 1 to 20 carbon atoms, and more preferably 1 to 10 carbon atoms, from the viewpoint of further excellent effects of the present invention. The above aliphatic hydrocarbon group is preferably a methyl group, an ethyl group, a propyl group, a butyl group, a pentyl group, a hexyl group, a heptyl group, an octyl group, a nonyl group, or a decyl group, and more preferably a methyl group, from the viewpoint of further excellent effects of the present invention.

Examples of the above aromatic hydrocarbon group include an aryl group and a naphthyl group. Examples of the above aryl group include aryl groups having 6 to 18 carbon atoms such as a phenyl group, a tolyl group, and a xylyl group.

Specific examples of the heteroatom that may be included in the hydrocarbon group include, but are not particularly limited to, an oxygen atom, a nitrogen atom, a sulfur atom, and a halogen atom (such as a fluorine atom, a chlorine atom, or a bromine atom). The above heteroatom may be bonded to another heteroatom, a carbon atom, or a hydrogen atom to form a functional group.

The compound represented by the above formula (X) is preferably camphene, from the viewpoint of further excellent effects of the present invention. Camphene is a compound represented by the following formula (X1).

[Chem. 7]

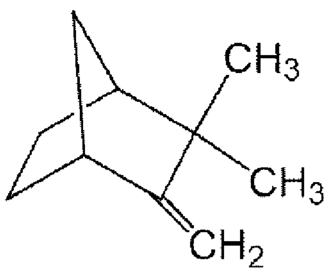

(X1)

In the present invention, the other compound which forms the above adduct is a phenolic compound. The above phenolic compound is not particularly limited, as long as it is a compound in which a hydroxy group is bonded to a benzene ring.

The above phenolic compound can have one or more phenolic hydroxy groups (hydroxy groups directly bonded to a benzene ring) per molecule, and preferably has one phenolic hydroxy group. Examples of the above phenolic compound include a compound represented by the following formula (Y).

[Chem. 8]

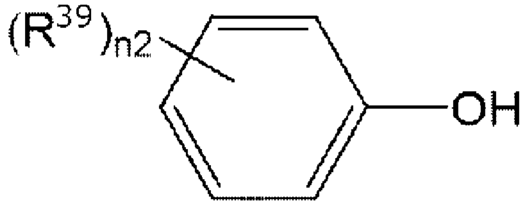

(Y)

wherein $R^{39}$ represents a substituent, and n2 represents 0 or 1 to 4.

Examples of the substituent as $R^{39}$ in the formula (Y) include a hydrocarbon group and a hydroxy group.

n2 represents 0 or 1 to 4, and is preferably 0, from the viewpoint of further excellent effects of the present invention.

The above phenolic compound is preferably phenol, for example, from the viewpoint of further excellent effects of the present invention.

The above adduct is preferably a reaction product of one molecule of the compound represented by the above formula (X) and one molecule of the above phenolic compound, from the viewpoint of further excellent effects of the present invention and less odor.

The above adduct preferably has a phenolic hydroxy group or a phenoxy group (each of them may further have the above substituent on a benzene ring) by the above phenolic compound, from the viewpoint of further excellent effects of the present invention.

The above adduct only requires to contain at least the above reaction product. The above adduct may further contain a reaction by-product and an unreacted product, in addition to the above reaction product.

Examples of the above adduct include compounds represented by the following formulas (Z1) to (Z3).

[Chem. 9]

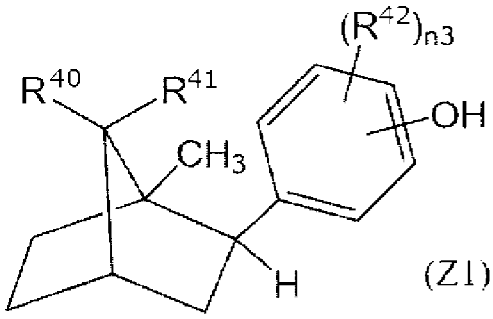

(Z1)

wherein $R^{40}$ and $R^{41}$ each independently represent a hydrocarbon group, $R^{42}$ represents a substituent, and n3 represents 0 or 1 to 4.

In the formula (Z1), the hydrocarbon groups as $R^{40}$ and $R^{41}$ are the same as the hydrocarbon groups as $R^{37}$ and $R^{38}$ in the formula (X). The substituent as $R^{42}$ is the same as the substituent as $R^{39}$ in the formula (Y). n3 represents 0 or 1 to 4, and is preferably 0.

[Chem. 10]

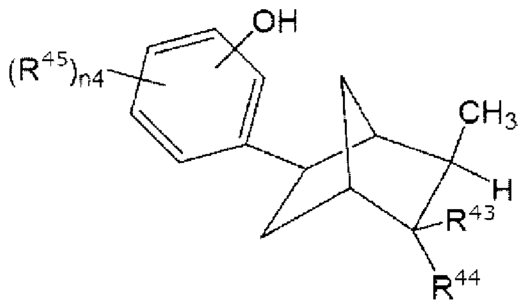

(Z2)

wherein $R^{43}$ and $R^{44}$ each independently represent a hydrocarbon group, $R^{45}$ represents a substituent, and n4 represents 0 or 1 to 4.

In the formula (Z2), the hydrocarbon groups as $R^{43}$ and $R^{44}$ are the same as the hydrocarbon groups as $R^{37}$ and $R^{38}$ in the formula (X). The substituent as $R^{45}$ is the same as the substituent as $R^{39}$ in the formula (Y). n4 represents 0 or 1 to 4, and is preferably 0.

[Chem. 11]

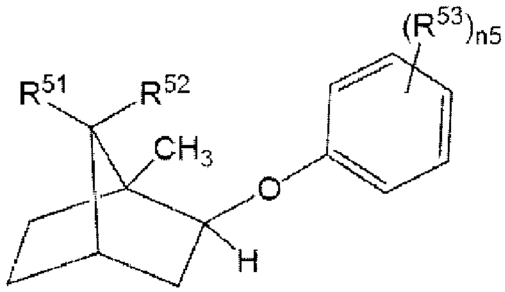

(Z3)

wherein $R^{51}$ and $R^{52}$ each independently represent a hydrocarbon group, $R^{53}$ represents a substituent, and n5 represents 0 or 1 to 4.

In the formula (Z3), the hydrocarbon groups as $R^{51}$ and $R^{52}$ are the same as the hydrocarbon groups as $R^{37}$ and $R^{38}$ in the formula (X).

The substituent as $R^{53}$ is the same as the substituent as $R^{39}$ in the formula (Y) .

n5 represents 0 or 1 to 4, and is preferably 0.

The above adduct preferably contains at least one compound selected from the group consisting of a compound represented by the formula (Z1-1), a compound represented by the formula (Z1-2), a compound represented by the formula (Z2-1), a compound represented by the formula (Z2-2), and a compound represented by the formula (Z3-1) described below, from the viewpoint of further excellent effects of the present invention and less odor.

[Chem. 12]

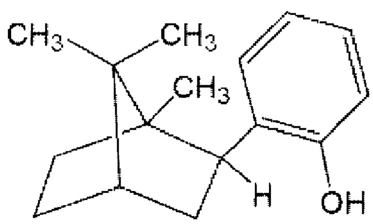

(Z1-1)

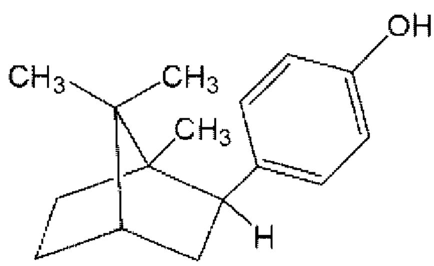

(Z1-2)

[Chem. 13]

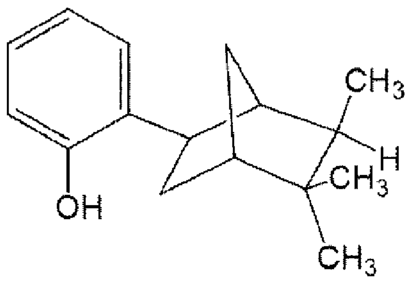

(Z2-1)

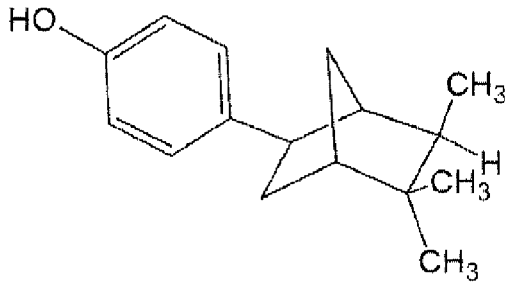

(Z2-2)

[Chem. 14]

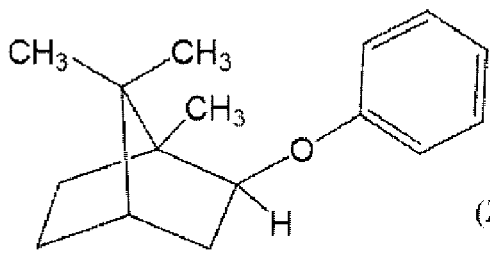

(Z3-1)

The method for producing the above adduct is not particularly limited, as long as it is a method for reacting the compound represented by the above formula (X) and the above phenolic compound. The amount of the compound represented by the above formula (X) and the above phenolic compound to be used in the above reaction is not particularly limited. The amount of the compound represented by the above formula (X) and the above phenolic compound to be used in reacting the compound represented by the above formula (X) with the above phenolic compound (molar ratio, compound represented by (X):phenolic compound) can be, for example, 1:0.5 to 2, and is preferably 1:0.8 to 1.2, and more preferably 1:1. The compound represented by the above formula (X) and the above phenolic compound can be reacted in the presence of a catalyst. Examples of the above catalyst include a boron trifluoride ether complex. The compound represented by the above formula (X) and the above phenolic compound may be reacted in a solvent. Examples of the above solvent include aromatic hydrocarbons such as benzene and toluene; aliphatic-based hydrocarbons such as cyclohexane; and halogenated hydrocarbons such as carbon tetrachloride.

The reaction temperature in reacting the compound represented by the above formula (X) and the above phenolic compound can be, for example, 0 to 100°C.

The content of the above adduct is preferably 0.05 to 10% by mass, and more preferably 0.1 to 1.0% by mass based on the total amount of the composition (adhesive) that forms the curable resin (E) of the present invention, from the viewpoint of further excellent effects of the present invention.

The mass ratio of the content of the above isocyanate derivative to the content of the above adduct (mass ratio of isocyanate derivative: adduct) is preferably 0.1:1 to 50:1, and more preferably 10:1 to 2:1, from the viewpoint of further excellent effects of the present invention.

When the adhesive is a two part adhesive, it can be appropriately selected whether the above adduct is added to the main agent or the curing agent.

The adhesive containing a polyurethane resin or the adhesive that forms a urethane bond may contain other components other than the components mentioned above. When the adhesive is a two part adhesive, it can be appropriately selected whether other components are added to the main agent or the curing agent. As such other components, for example, various additives such as a filler (e.g., carbon black, calcium carbonate), a catalyst (curing catalyst), a plasticizer, an anti-aging agent, an antioxidant, a silane coupling agent, a pigment (dye), an adhesion imparting agent, a terpene compound such as terpineol, a thixotropy imparting agent, an ultraviolet absorber, a flame retardant, a surfactant (including a leveling agent), a dispersing agent, a dehydrating agent, and an antistatic agent can be further contained. The above filler may be, for example, surface treated by at least one treatment agent selected from the group consisting of a fatty acid, a resin acid, a urethane compound, and a fatty acid ester. When the adhesive is a two part adhesive, it can be appropriately selected whether the above optional components are added to the main agent or the curing agent.

The resin cured layer (ii) is only required to be a layer containing the above-described curable resin (E) having a urethane bond, and is preferably a cured product of the adhesive containing a polyurethane resin or the adhesive that forms a urethane bond, although the method for forming the layer is not limited.

The curable resin (E) having a urethane bond and the resin cured layer (ii) containing the curable resin (E) are preferably produced by using a biomass-derived raw material in at least a part thereof, from the viewpoint of exploiting a renewable resource and reducing the amount of $CO_2$ discharged. That is, in the present invention, one or more biomass-derived raw materials are preferably used as the raw material used in forming the curable resin (E) having a urethane bond or the resin cured layer (ii) containing the curable resin (E), such as components constituting the adhesive containing a polyurethane resin or the adhesive that forms a urethane bond. Herein, the term biomass refers to "recyclable organic resources derived from organisms excluding fossil resources", and the term biomass-derived raw material means a raw material containing a component derived from an organic matter generated by photosynthesis by organisms from water and carbon dioxide using solar energy. Note that, whether the material is a biomass-derived raw material can also be determined by the proportion of biomass-derived carbon determined by the 14C method defined in ASTM D6866.

As the biomass-derived raw material, for example, a raw material in which the degree of biomass measured by ASTM D6866 Method B is 50% or more, a raw material in which the degree of plant (the proportion of plant-derived components) is 50% or more, or a commercially available raw material that is evidenced to be derived from a natural raw material other than fossil resources can be used without particular limitation.

[Layered structure]

The layered structure of the present invention is formed by directly layering the resin cured layer (ii) containing the curable resin (E) having a urethane bond, on the above-described molded body (i) composed of the polypropylene-based resin composition.

The polypropylene-based resin composition according to the present invention is excellent in the adhesiveness to the resin cured layer (ii) containing the curable resin (E) having a urethane bond, in which the molded body (i) and the resin cured layer (ii) are firmly adhered to each other despite that they are directly layered without interposing a primer, and the adhesive strength is highly retained in the layered structure under high temperatures at which the adhesive strength is usually reduced.

In the present invention, for example, the production method and the shape of the molded body (i), the resin cured layer (ii), and the layered structure of the present invention in which the molded body (i) and the resin cured layer (ii) are layered are not limited. The layered structure of the present invention may be a layered structure composed only of the molded body (i) and the resin cured layer (ii), or may be one in which another layer other than the molded body (i) and the resin cured layer (ii) is further layered, or, for example, may be a layered structure in which the molded body (i), the resin cured layer (ii), and another member are layered in the order presented. The layered structure in which the molded body (i), the resin cured layer (ii), and another member are layered can be produced by for example, a method in which a curable composition for forming the resin cured layer (ii) is applied on the molded body (i), another member is bonded thereto before the composition is cured, and the composition is cured to form the resin cured layer (ii) between the molded body (i) and another member, or a method in which a curable composition for forming the resin cured layer (ii) is applied on another member, the molded body (i) is bonded thereto before the composition is cured, and the composition is cured to form the resin cured layer (ii) between the molded body (i) and another member.

When the resin cured layer (ii) is a cured product of the adhesive containing a polyurethane resin or the adhesive that forms a urethane bond, the resin cured layer (ii) may be produced by applying and curing the adhesive on the molded body (i), may be produced by applying the adhesive on the molded body (i) and curing the adhesive in a state of being bonded with another member, or may be produced by applying the adhesive on another member to be bonded to the molded body (i) and curing the adhesive in a state of being bonded with the molded body (i). In the production of the layered structure in which the molded body (i), the resin cured layer (ii), and another member are layered, the resin cured layer (ii) may be produced by bonding, for example, a release film on which an adhesive is applied to the molded body (i), releasing the release film to form an adhesive layer on the molded body (i), bonding another member thereto, and then curing the adhesive layer, or may be produced by bonding, for example, a release film on which an adhesive is applied to another member, releasing the release film to form an adhesive layer on another member, bonding the molded body (i) thereto, and then curing the adhesive layer. In the production of such a resin cured layer (ii), the adhesive is preferably in a state of being in contact with the molded body (i) upon curing, and the adhesive is more preferably applied and cured on the molded body (i).

Preferably, the method for producing a layered structure of the present invention includes a step of molding the above-described polypropylene-based resin composition by injection molding or press molding to produce a molded body (i), and

a step of contacting or applying the curable resin (E) having a urethane bond or a raw material thereof with or to the molded body (i), followed by curing to form a resin cured layer (ii).

More preferably, the method for producing a layered structure of the present invention includes a step of molding the above-described polypropylene-based resin composition by injection molding or press molding to produce a molded body (i), and

a step of applying and curing a urethane-based adhesive containing a urethane prepolymer having a polyether skeleton and an aliphatic isocyanate derivative to the molded body (i) to form a resin cured layer (ii).

Specific examples of the method include a method of subjecting the surface of the molded body (i) obtained by molding the above-described polypropylene-based resin composition by injection molding or press molding to surface treatment such as flame treatment or plasma treatment as necessary, and then directly applying and curing, for example, the curable resin (E) having a urethane bond or an adhesive that is the raw material of the curable resin (E) to form the resin cured layer (ii). The curing conditions can be selected according to, for example, the kind of the curable resin (E) to be used or the raw material thereof, and the presence or absence and the kind of the curing agent, and curing can be carried out at a temperature of, for example, 20°C or more and less than 100°C, preferably 40°C or more and less than 80°C.

The layered structure of the present invention may have a layer of another member other than the molded body (i) and the resin cured layer (ii). In one preferred aspect of the layered structure of the present invention, a layered structure in which the molded body (i), the resin cured layer (ii), and the layer of another member are layered in the order presented. In such a layered structure, the molded body (i) and the layer of another member are preferably in a form adhered via the resin cured layer (ii).

Another member that constitutes the layer of another member may be any member without particular limitation, and examples thereof include resin members such as an ABS resin, a PVC sheet, a polyolefin sheet, and a polyolefin sheet with a foamed layer, glass, cloth, fabric, metal (such as iron (mild steel), a cation electrodeposition steel plate, and aluminum), wood, paper, and composite materials of them. In the production of the layered structure having a layer of one of these another members, for example, a method in which, for example, the curable resin (E) having a urethane bond constituting the resin cured layer (ii) or an adhesive that is the raw material of the curable resin (E) is directly applied on the surface of the molded body (i), another member is contacted and stacked with the applied surface, and then they are adhered by, for example, curing at room temperature, heating or compression can be employed.

Such a layered structure of the present invention is excellent in dimensional stability, and the molded body (i) and the resin cured layer (ii) are firmly adhered without interposing a primer even at high temperature where adhesiveness tends to be decreased. For example, the layered structure of the present invention maintains high adhesion strength even under high temperature environment at about 90°C at which the strength is considered to be most difficult to obtain in the conventional adhesion test, and exhibits sufficient adhesion strength in the hot shear test at 90°C. Specifically, the interlayer shear strength of the molded body (i) and the resin cured layer (ii) exhibits excellent adhesion strength such that it is usually 1.2 MPa or more, preferably more than 1.5 MPa, more preferably more than 2.0 MPa, and even more preferably 2.5 MPa or more in the hot shear strength test (tensile rate: 50 mm/min) under conditions of 90°C according to JIS K6850:1999.

The layered structure of the present invention can be suitably utilized in applications such as an automobile interior material such as a door trim, an instrument panel, a ceiling, a console box, a pillar, and a glove box; an automobile exterior member such as a bumper, a side guard, an air spoiler, a side protector, a fender, a door panel, and a back door; a home appliance component; or an industrial component such as a building material, and particularly suitably utilized as an automobile exterior member such as a back door.

## Examples

Hereinafter the present invention will be described in detail with reference to Examples, but the present invention is not limited to these Examples.

The measurement and evaluation of each physical property were carried out by the following methods.

[Melt flow rate (MFR) (g/10 min)]

MFR was measured under conditions of a test load of 2.16 kg and a test temperature of 230°C according to ISO 1133. [Amount of decane-soluble portion ($D_{sol}$) and amount of decane-insoluble portion ($D_{insol}$)]

About 3 g of the [component (A)] (it was measured to a unit of $10^{-4}$ g, and this mass was denoted as $x_2$ (g) in the following equation), 500 ml of n-decane, and a small amount of a heat-resistant stabilizer soluble in n-decane were loaded in a glass measurement vessel, and the sample was dissolved by being heated to 150°C over 2 hours while being stirred with a stirrer in a nitrogen atmosphere, then held at 150°C for 2 hours, and gradually cooled to 23°C over 8 hours. The resulting liquid containing precipitates was subjected to filtration under reduced pressure through a 25G-4 standard glass filter manufactured by Iwata Glass Industrial Co., Ltd. Then, 100 ml of the filtrate was harvested and dried under reduced pressure to give a part of a decane-soluble component, and the mass thereof was weighed to a

unit of $10^{-4}$g (this mass was denoted as $x_1$ (g) in the following equation). Using this measured value, the amount of the decane-soluble portion ($D_{sol}$) and the amount of the decane-insoluble portion ($D_{insol}$) at room temperature (i.e., 23°C) were determined by the following equation.

$$D_{sol} \text{ (\% by mass)} = 100 \times (500 \times x_1)/(100 \times x_2)$$

$$D_{insol} \text{ (\% by mass)} = 100 - D_{sol}$$

[Melting point peak]

An endothermic curve was determined by a differential scanning calorimeter (DSC), and then the temperature at the maximum peak position was determined as the melting point peak (Tm).

As for the measuring machine, Pyris 1 manufactured by PerkinElmer was used. The sample was placed in an aluminum pan, and the temperature was held at 30°C for 1 minute, then increased to 160°C at 500°C/min, thereafter held at 160°C for 5 minutes, decreased to -30°C at 10°C/min, and then the melting point peak (Tm) was determined from the endothermic curve obtained when the temperature was increased at 10°C/min from -30°C to 160°C.

[Average particle size of inorganic filler]

A particle size value at a cumulative amount of 50% by mass read from a particle size cumulative curve measured by a laser diffraction method according to JIS R1620 and JIS R1622 was set to the average particle size.

[Aspect ratio of inorganic filler]

Powders were photographed using an electron microscope, the major axis (particle size) and the thickness of the powders were measured, the average values thereof were determined, and the aspect ratio was determined from the ratio of the average particle size/the average thickness.

[Flexural modulus (MPa)]

The flexural modulus was measured under the following conditions according to ASTM D790.

Temperature: 23°C
Test piece: 127 mm (length) × 12.7 mm (width) × 6.35 mm (thickness)
Bending speed: 30 mm/min
Span distance: 100 cm

[Izod impact strength (J/m)]

The Izod impact strength was measured under the following conditions according to ASTM D256.

Test piece: 63.5 mm (length) × 12.7 mm (width) × 3.2 mm (thickness) with a notch
Test temperature: -30°C

[Coefficient of linear expansion ($10^{-5}$/°C)]

The coefficient of linear expansion was evaluated by the TMA method (measurement range: -30 to 80°C) according to ASTM D 696.

[Primerless interlayer adhesion test (hot shear test at 90°C)]

The resin plate side of an adhesion shear test body in which a resin plate and a glass plate were made into an adherend as illustrated in the schematic diagram of Figure 1 was fixed using a tensile testing machine according to JIS K6850:1999, the glass side was attached to a fixing jig, the shear strength was measured at 90°C under conditions of a tensile rate of 50 mm/min, and the average value of measured values of four times was determined as the hot shear test strength (MPa).

[Production Example 1] Preparation of propylene/ethylene block copolymer (A-1)

(1) Preparation of solid titanium catalyst component

95.2 g of anhydrous magnesium chloride, 442 mL of decane, and 390.6 g of 2-ethylhexylalcohols were allowed to thermally react at 130°C for 2 hours to obtain a uniform solution. 21.3 g of phthalic anhydride was added into this solution, and the mixture was further mixed while stirring at 130°C for 1 hour to dissolve phthalic anhydride.

After this uniform solution was cooled to room temperature, 75 mL of the uniform solution was added dropwise into 200 mL of titanium tetrachloride held at -20°C over 1 hour. After the addition was finished, the temperature of this mixed solution was increased to 110°C over 4 hours. When the temperature reached 110°C, 5.22 g of diisobutyl phthalate (DIBP) was added, and the mixture was held at the same temperature for 2 hours while stirring.

After the reaction for 2 hours was finished, the solid portion was harvested by hot filtration, resuspended in 275 ml of titanium tetrachloride, and again heated at 110°C for 2 hours. After the reaction was finished, the solid portion was harvested again by hot filtration and thoroughly washed at 110°C with decane and hexane until no free titanium compound was detected in the solution.

The detection of this free titanium compound was confirmed by the following method. 10 mL of the supernatant of the above solid catalyst component was harvested with a syringe and added to 100 mL of a branched Schlenk substituted with nitrogen in advance. Then, the solvent hexane was dried with nitrogen gas flow, and further vacuum dried for 30 minutes. To this, 40 mL of ion-exchange water and 10 mL of (1+1) sulfuric acid were added and stirred for 30 minutes. This aqueous solution was transferred through a filter to a 100 mL volumetric flask. Subsequently, 1 mL of a concentrated $H_3PO_4$ solution as the masking agent of iron (II) ions and 5 mL of a 3% aqueous hydrogen peroxide solution as the coloring reagent of titanium were added, and the volumetric flask was further filled up to 100 mL with ion-exchange water and shaken for mixing. After 20 minutes, the absorbance at 420 nm was observed using UV, and free titanium was removed by washing until this absorption was not observed.

The solid titanium catalyst component prepared as described above was preserved as a decane slurry, and a part of the slurry was dried to check the catalyst composition. The composition of the solid titanium catalyst component thus obtained had 2.3% by mass of titanium, 61% by mass of chlorine, 19% by mass of magnesium, and 12.5% by mass of DIBP.

(2) Production of prepolymerization catalyst

100 g of the solid titanium catalyst component, 131 mL of triethylaluminum, 37.3 ml of diethylamino triethoxysilane, and 14.3 L of heptane were inserted into an autoclave equipped with a stirrer with a capacity of 20 L, 1000 g of propylene was inserted thereto while holding the internal temperature at 15 to 20°C, and the mixture was allowed to react for 120 minutes while stirring. After polymerization was finished, the solid component was precipitated, and the removal of the supernatant and washing with heptane were carried out twice. The resulting prepolymerization catalyst was resuspended in the purified heptane, and the concentration of the mixture was regulated with heptane so that the solid catalyst component concentration was 1.0 g/L to obtain a prepolymerization catalyst slurry.

(3) Polymerization

A jacketed circulation type tubular polymerizer with a capacity of 58 L was continuously supplied with propylene at 43 kg/hour, hydrogen at 256 NL/hour, the prepolymerization catalyst slurry produced in (2) at 0.49 g/hour as the solid titanium catalyst component, triethylaluminum at 4.5 mL/hour, and diethylamino triethoxysilane at 1.8 mL/hour, and polymerization was performed in a full liquid state without a gas phase. The temperature of the tubular polymerizer was 70°C, and the pressure was 3.57 MPa/G.

The resulting slurry was fed to a vessel polymerizer equipped with a stirrer with a capacity of 100 L, and polymerization was further carried out. The polymerizer was supplied with propylene at 45 kg/hour, and hydrogen so that the hydrogen concentration in the gas phase was 8.8 mol%, and polymerization was carried out at a polymerization temperature of 68°C and a pressure of 3.36 MPa/G.

Then, the resulting slurry was transferred to a liquid transfer pipe with a capacity of 2.4 L, the slurry was gasified, and gas-solid separation was carried out. Thereafter, polypropylene homopolymer powder was fed to a gas phase polymerizer with a capacity of 480 L, and ethylene/propylene block copolymerization was carried out. The gas phase polymerizer was continuously supplied with propylene, ethylene, and hydrogen so that the gas composition in the gas phase polymerizer was ethylene/(ethylene + propylene) = 0.20 (a molar ratio) and hydrogen/ethylene = 0.0031 (a molar ratio), and polymerization was carried out at a polymerization temperature of 70°C and a pressure of 1.40 MPa/G.

Then, the resulting propylene-based block copolymer was vacuum dried at 80°C. In the propylene/ethylene block copolymer (A-1) thus obtained, the MFR (230°C, 2.16 kg load) was 80 g/10 min, the amount of the decane-soluble

portion (propylene/ethylene copolymer component) was 7% by mass, the amount of the decane-insoluble portion (propylene homopolymer component) was 93% by mass, and the intrinsic viscosity [η] of the decane-soluble portion was 7.5 dl/g.

[Production Example 2] Preparation of propylene homopolymer (B-1)

A solid titanium catalyst component was obtained in the same manner as (1) Preparation of solid titanium catalyst component of Production Example 1.

(2) Production of prepolymerization catalyst

100 g of the solid titanium catalyst component, 39.3 mL of triethylaluminum, and 100 L of heptane were inserted into an autoclave equipped with a stirrer with a capacity of 200 L, 600 g of propylene was inserted thereto while holding the internal temperature at 15 to 20°C, and the mixture was allowed to react while stirring for 60 minutes to obtain a prepolymerization catalyst slurry.

(3) Polymerization

A jacketed circulation type tubular polymerizer with a capacity of 58 L was continuously supplied with propylene at 43 kg/hour, hydrogen at 177 NL/hour, the prepolymerization catalyst slurry produced in (2) at 0.58 g/hour as the solid titanium catalyst component, triethylaluminum at 3.1 mL/hour, and dicyclopentyldimethoxysilane at 3.3 mL/hour, and polymerization was performed in a full liquid state without a gas phase. The temperature of the tubular polymerizer was 70°C, and the pressure was 3.53 MPa/G.

The resulting slurry was fed to a polymerization vessel equipped with a stirrer with a capacity of 100 L, and polymerization was further carried out. The polymerizer was supplied with propylene at 45 kg/hour, and hydrogen so that the hydrogen concentration in the gas phase was 3.2 mol%, and polymerization was carried out at a polymerization temperature of 70°C and a pressure of 3.28 MPa/G.

Then, the resulting propylene homopolymer was vacuum dried at 80°C. The MFR (230°C, 2.16 kg load) of the propylene homopolymer (B-1) thus obtained was 30 g/10 min.

[Production Example 3] Preparation of propylene homopolymer (B-2)

First, a prepolymerization catalyst slurry was obtained in the same manner as (1) Preparation of solid titanium catalyst component and (2) Production of prepolymerization catalyst of Production Example 1.

(3) Polymerization

A polymerization vessel equipped with a stirrer with a capacity of 1000 L was continuously supplied with propylene at 131 kg/hour, the prepolymerization catalyst slurry at 0.70 g/hour as the transition metal catalyst component, triethylaluminum at 19.6 mL/hour, and diethylamino triethoxysilane at 4.2 mL/hour, and supplied with hydrogen so that the hydrogen concentration in the gas phase was 5.3 mol%, and polymerization was carried out at a polymerization temperature of 75°C and a pressure of 3.5 MPa/G.

The resulting slurry was fed to a polymerization vessel equipped with a stirrer with a capacity of 500 L, and polymerization was further carried out. The polymerizer was supplied with propylene at 30 kg/hour, and hydrogen so that the hydrogen concentration in the gas phase was 3.9 mol%, and polymerization was carried out at a polymerization temperature of 74.5°C and a pressure of 3.4 MPa/G.

Then, the resulting slurry was fed to a polymerization vessel equipped with a stirrer with a capacity of 500 L, and polymerization was further carried out. The polymerizer was supplied with propylene at 20 kg/hour, and hydrogen so that the hydrogen concentration in the gas phase was 3.4 mol%, and polymerization was carried out at a polymerization temperature of 73°C and a pressure of 3.4 MPa/G.
Then, the resulting slurry was deactivated and vaporized, and then, gas-solid separation was carried out. The resulting propylene homopolymer was vacuum dried at 80°C. The MFR (230°C, 2.16 kg load) of the propylene homopolymer (B-2) thus obtained was 210 g/10 min.

[Ethylene/α-olefin copolymer]

As the ethylene/α-olefin copolymer(C-1), TAFMER(R) A4050S (ethylene content = 80 mol%, 1-butene content = 20 mol%, MFR (230°C, 2.16 kg load) = 7 g/10 min, density = 0.862 g/$cm^3$, and melting point peak = less than 50°C)

manufactured by Mitsui Chemicals, Inc. was used.

As the ethylene/α-olefin copolymer(C-2), TAFMER(R) A1050S (ethylene content = 80 mol%, 1-butene content = 20 mol%, MFR (230°C, 2.16 kg load) = 2 g/10 min, density = 0.862 g/cm3, and melting point peak = less than 50°C) manufactured by Mitsui Chemicals, Inc. was used.

As the ethylene/α-olefin copolymer (C-3), ENGAGE(R) 11547 (MFR (230°C, 2.16 kg load) = 9 g/10 min, density = 0.866 g/$cm^3$, melting point peak = 120°C) which is a polyolefin elastomer manufactured by The Dow Chemical Company was used.

[Inorganic filler]

As the inorganic filler (D-1), talc having the following characteristics was used.

(D-1): talc, average particle size (laser diffraction method) = 6.0 μm, aspect ratio (measured by SEM) = 7.0

[Production Examples 4 to 6] Preparation of main agents (E1-1) to (E1-3)

The components in the following Table 1 were mixed using a stirrer in the composition (parts by mass) shown in Table 1, thereby preparing each of the main agents (E1-1) to (E1-3) of two part curable adhesives.

[Table 1]

Table 1

| | | Production Example 4 | Production Example 5 | Production Example 6 |
|---|---|---|---|---|
| (Main agent) | | E1-1 | E1-2 | E1-3 |
| Main agent composition (parts by mass) | Polymer 1 | 42.4 | | 42.4 |
| | Polymer 2 | | 29.9 | |
| | Epoxy resin 1 | | 2.8 | |
| | Epoxy resin 2 | | 11.4 | |
| | Compound 1 | 1.7 | | 1.7 |
| | Compound 2 | 1.3 | | 1.3 |
| | Compound 3 | | 4.6 | |
| | Compound 4 | | | 0.5 |
| | Carbon black | 20.6 | 3.3 | 20.6 |
| | Calcium carbonate 1 | 18.3 | 7.9 | 18.3 |
| | Calcium carbonate 2 | | 36.8 | |
| | Plasticizer 1 | 15.5 | | 15.5 |
| | Plasticizer 2 | | 3.2 | |
| | Catalyst 1 | 0.2 | | 0.2 |
| | Catalyst 2 | | 0.1 | |
| | Total | 100.0 | 100.0 | 100.5 |

The details of each component in the above Table 1 are as follows.

(Detail of main agent component)

Polymer 1: a urethane prepolymer synthesized below:

The urethane prepolymer (polymer 1) containing 2.10% of the isocyanate group was synthesized by mixing 700 g of polyoxypropylenediol (average molecular weight: 2000), 300 g of polyoxypropylenetriol (average molecular weight: 3000), and 499 g of 4,4'-diisocyanatephenylmethane (molecular weight: 250) (at this time, NCO/OH = 2.0), further adding 500 g of diisononyl phthalate, and stirring in a nitrogen stream at 80°C for 12 hours, thereby allowing them to react with each other.

Polymer 2: a modified silicone resin in which the main chain is polyoxypropylene and which has a methyl dimethoxysilyl group at the terminal as a hydrolyzable silyl group. KANEKA MS polymer S203 (manufactured by KANEKA CORPORATION)

Epoxy resin 1: ADEKA RESIN EP-4100 (manufactured by ADEKA CORPORATION)

Epoxy resin 2: ADEKA RESIN EP-4006 (manufactured by ADEKA CORPORATION)

Compound 1: an isocyanurate of hexamethylene diisocyanate (Takenate D-170HN, manufactured by Mitsui Chemicals, Inc.)

Compound 2: a mixture of isocyanurate and allophanate of pentamethylene diisocyanate (STABiO D-376N (low viscosity type), manufactured by Mitsui Chemicals, Inc.) (biomass-derived compound: degree of plant (ASTM D6866-04): 67%) Compound 3: a ketimine latent curing agent EPICURE H-30 (manufactured by Mitsubishi Chemical Corporation)

Compound 4: an adduct of camphene and phenol (manufactured by YASUHARA CHEMICAL CO., LTD.). The above adduct used as this compound 4 contains at least one compound selected from the group consisting of a compound represented by the formula (Z1-1), a compound represented by the formula (Z1-2), a compound represented by the formula (Z2-1), a compound represented by the formula (Z2-2), and a compound represented by the formula (Z3-1) described below, which are commercial products (biomass-derived compound: degree of biomass (ASTM D6866 Method B): 55%).

[Chem. 15]

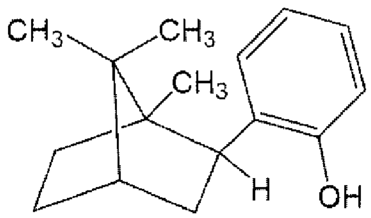

(Z1-1)

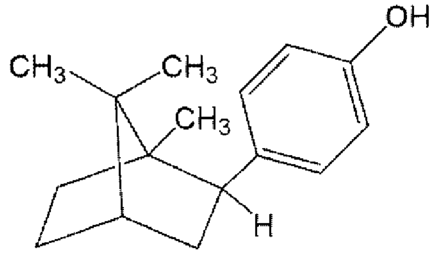

(Z1-2)

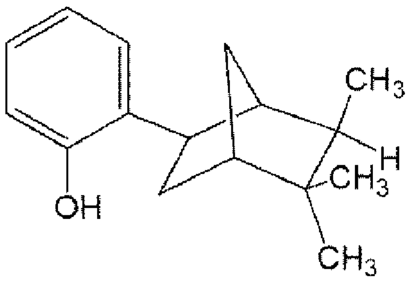

(Z2-1)

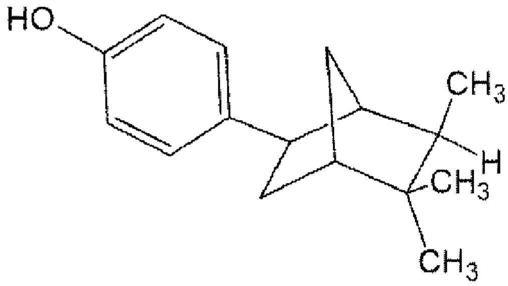

(Z2-2)

[Chem. 16]

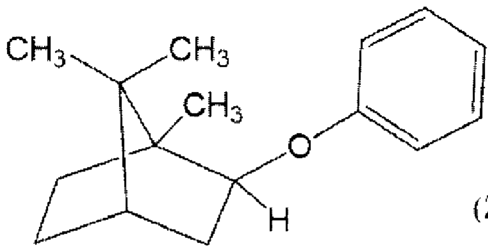

(Z3-1)

Carbon black: #200MP (manufactured by NSCC Carbon Co., Ltd.)

Calcium carbonate 1: SUPER S (manufactured by MARUO CALCIUM CO., LTD.)

Calcium carbonate 2: KALFAIN200 (manufactured by MARUO CALCIUM CO., LTD.)

Plasticizer 1: diisononyl phthalate (manufactured by J-PLUS Co., Ltd.)

Plasticizer 2: Shellsol TM (manufactured by Japan Chemtech Ltd.)

Catalyst 1: dimorpholino diethyl ether (manufactured by San-Apro Ltd.)

Catalyst 2: tin-based catalyst NEOSTANN U-303 (manufactured by NITTO KASEI CO., LTD.)

[Production Examples 7 and 8] Preparation of curing agents (E2-1) and (E2-2)

The components in the following Table 2 were mixed using a stirrer in the composition (parts by mass) shown in Table 2, thereby preparing each of the curing agents (E2-1) and (E2-2) of two part curable adhesives.
[Table 2]

Table 2

| | | Production Example 7 | Production Example 8 |
|---|---|---|---|
| (Curing agent) | | E2-1 | E2-2 |
| Curing agent composition (parts by mass) | Compound 5 | 45.9 | 9.8 |
| | Compound 6 | 5.0 | |
| | Compound 7 | 2.0 | |
| | Compound 8 | | 5.2 |
| | Compound 9 | | 2.5 |
| | Polymer 2 | | 33.0 |
| | Calcium carbonate 2 | 45.8 | 43.3 |
| | Ion-exchange water | 1.0 | 1.0 |
| | Catalyst 1 | 0.3 | |
| | Catalyst 3 | | 5.2 |
| | Total | 100.0 | 100.0 |

The details of each component in the above Table 2 are as follows.

(Detail of curing agent component)

Compound 5: trifunctional polypropylene polyol (EXCENOL 1030, manufactured by Asahi Glass Co., Ltd)
Compound 6: polybutadiene diol (Poly bd R-45HT, manufactured by Idemitsu Kosan Co., Ltd., hydroxyl value: 0.8 mol/kg)
Compound 7: terpineol (manufactured by YASUHARA CHEMICAL CO., LTD.) (biomass-derived compound: degree of biomass (ASTM D6866 Method B): 95% or more)
Compound 8: 3-glycidoxypropyltrimethoxysilane Sila-Ace S-510 (manufactured by CHISSO CORPORATION)
Compound 9: X-12-972F (aminosilane oligomer) (manufactured by Shin-Etsu Chemical Co., Ltd.)
Calcium carbonate 2: KALFAIN200 (manufactured by MARUO CALCIUM CO., LTD.)
Catalyst 1: dimorpholino diethyl ether (manufactured by San-Apro Ltd.)
Catalyst 3: amine-based catalyst TEDA-L33E (manufactured by Tosoh Corporation)

[Examples 1 to 3 and Comparative Examples 1 to 3]

Preparation of molded body test piece and surface treatment

The components of the propylene-based polymer (A), the propylene homopolymer (B), the ethylene/α-olefin copolymer (C), and the inorganic filler (D) were mixed according to the kinds and amounts shown in Table 3 and extruded by a biaxial extruder (TEX(R) 30α manufactured by The Japan Steel Works, LTD.) under conditions of a cylinder temperature of 180°C, a screw rotation of 750 rpm, and an amount of extrusion of 60 kg/h to obtain each polypropylene-based resin composition. Each melt flow rate (230°C, 2.16 kg load) of each of the resulting polypropylene-based resin compositions is shown in Table 3.

Each of the resulting polypropylene-based resin compositions was subjected to injection molding using a mold cavity having a length of 350 mm, a width of 100 mm, and a thickness of 3 mm at a resin temperature of 210°C and a mold temperature of 40°C to obtain flat plates, and each of them was cut out into a shape of 100 mm × 50 mm × 3 mm to obtain molded body test pieces (flat plates) for producing the layered structure.

Also, molded body test pieces for measurement having the above-described shape were obtained by injection molding/cutting at the same resin temperature and the same molding temperature. Using each of the resulting molded body test pieces, the flexural modulus, the Izod impact strength, and the coefficient of linear expansion were measured by the above-described testing methods. The results are shown in Table 3.

The flat plates obtained above were cut into a shape of 100 mm × 25 mm × 3 mm to obtain each test piece. The surface of the resulting test piece was subjected to surface treatment (flame treatment). As for the surface treatment, a flame treatment apparatus (FTS 201 manufactured by Arcogas) was used. In the flame treatment apparatus, the flow rate of the combustion gas and the air can be regulated.

As for the surface treatment, a surface having a surface free energy of 42 dyne/cm (mN/m) (surface treated state: low treatment) was fabricated by fixing the flow rate of the air to 100 L/min, regulating the flow rate of the combustion gas (propane gas) to 3.7 L/min, and setting the distance between the flat plate and a flame irradiation head to 40 mm and the treatment speed to 800 mm/sec. Also, a surface having a surface free energy of 52 dyne/cm (mN/m) (surface treated state: middle treatment) was fabricated by setting the distance to 30 mm and the treatment speed to 800 mm/sec, and further, a surface having a surface free energy of 64 dyne/cm (mN/m) (surface treated state: high treatment) was fabricated by setting the distance to 10 mm and the treatment speed to 800 mm/sec, in the same manner.

Preparation of adhesive

Using the main agent and the curing agent of the kind shown in Table 3, 100 g of the main agent and 10 g of the curing agent were mixed to obtain each adhesive immediately before application of the adhesive.

Each of the adhesives (E-1) and (E-3) is a urethane-based adhesive, and the adhesive layer obtained by using the adhesive is cured to form a resin cured layer containing a curable resin having a urethane bond. The adhesive (E-2) is a nonurethane-based adhesive, and the adhesive layer obtained by using the adhesive is cured to form a resin cured layer containing a curable resin having a nonurethane bond.

Preparation and evaluation of layered structure

An adhesive layer composed of the adhesive obtained above was formed on each test piece subjected to surface treatment obtained above so as to have an adhesion area of 25 mm (width) × 10 mm (length) and a thickness of 5 mm, glass (7.5 × 25 × 5 mm in thickness) was selected and used as an opposite member through the adhesive layer, and this was cured under room temperature conditions to obtain layered structure test pieces in which a molded body composed of the polypropylene-based resin composition, a resin cured layer obtained from the adhesive, and glass are layered.

After each obtained layered structure test piece was cured at room temperature for 3 days, the rear surface thereof at the resin substrate side was subjected to the same surface treatment as above, and a cation electrodeposition steel plate having a thickness of 1 mm was bonded thereto using an adhesive (WS-242 manufactured by Sika Hamatite), which was further cured at room temperature for 3 days. Then, glass was fixed using a tensile testing machine according to JIS K6850:1999 as illustrated in the schematic diagram of Figure 1, and the hot shear strength test was carried out at 90°C (tensile rate: 50 mm/min). The results are shown in Table 3.

[Table 3]

Table 3

| | | | | | | | Example 1 | Example 2 | Example 3 | Comparative Example 1 | Comparative Example 2 | Comparative Example 3 |
|---|---|---|---|---|---|---|---|---|---|---|---|---|
| | | | MFR (g/10 min) | Melting pointpeak (°C) | (unit) | | | | | | | |
| Blending composition of polypropylene-based resin composition | Component (A) | A-1 | 80 | | parts by mass | Propylene/ ethylene block copolymer | 13 | 13 | 13 | 13 | 13 | 13 |
| | Component (B) | B-1 | 30 | | parts by mass | Propylene homopolymer (B-1) | 10 | 20 | 10 | 10 | 10 | 10 |
| | | B-2 | 200 | | parts by mass | Propylene homopolymer (B-2) | 16.5 | 6.5 | 16.5 | 16.5 | 165 | 16.5 |
| | Component (C) | C-1 | 7 | <50°C | parts by mass | Ethylene/α-olefin copolymer | | | | 25.5 | | |
| | | C-2 | 2 | <50°C | parts by mass | Ethylene/α-olefin copolymer | | | | | 25.5 | |
| | | C-3 | 9 | 120°C | parts by mass | Ethylene/α-olefin copolymer | 25.5 | 25.5 | 25.5 | | | 25.5 |
| | Component (D) | D-1 | - | | parts by mass | Talc | 35 | 35 | 35 | 35 | 35 | 35 |
| Physical properties of polypropylene-based resin composition | MFR (230°C, 2.16 kg) | | | | g/10 min | | 38 | 28 | 38 | 31 | 22 | 38 |
| Physical properties of molded body | Flexural modulus | | | | MPa | | 2637 | 2508 | 2637 | 2644 | 2644 | 2637 |
| | Izod impact strength at -30°C | | | | J/m | | 44 | 46 | 44 | 43 | 54 | 44 |
| | Coefficient of linear expansion (-30°C to 80°C) MD and TD average value | | | | $\times 10^{-5}/°C$ | | 3.5 | 3.8 | 3..5 | 3.5 | 3.9 | 3.5 |

(continued)

| | | | | | Example 1 | Example 2 | Example 3 | Comparative Example 1 | Comparative Example 2 | Comparative Example 3 |
|---|---|---|---|---|---|---|---|---|---|---|
| Adhesive | Component (E) | E-1: main agent E1-1/curing agent E2-1 | Curable resin having a urethane bond | | O | O | | O | O | |
| | | E-2: main agent E1-2/curing agent E2-2 | Curable resin having a nonurethane bond | | | | | | | O |
| | | E-3: main agent E1-3/curing agent E2-1 | Curable resin having a urethane bond | | | | O | | | |
| Interlayer adhesion test (primerless) | Hot shear strength at 90°C (average n=4) | Surface treated state Low treatment | MPa | Dyne: 42 | 1.64 | 2.30 | 2.11 | 1.66 | 1.48 | <1.5 |
| | | Surface treated state Middle treatment | MPa | Dyne: 52 | 2.17 | 2.12 | 2.21 | 1.41 | 1.28 | <1.5 |
| | | Surface treated state High treatment | MPa | Dyne: 64 | 1.99 | 2.17 | 2.16 | 1.53 | 1.48 | <1.5 |

As is apparent from the results shown in Table 3, the layered structures of Examples 1 to 3 having a layer of the molded body composed of a polypropylene-based resin composition containing an ethylene/α-olefin copolymer having such a high melting point that the melting point peak is 110°C or more and a resin cured layer composed of a curable resin having a urethane bond (cured product of an adhesive) have excellent mechanical properties, the interlayer is firmly adhered despite that they are layered structures layered without interposing a primer (in a primerless manner), and have high adhesion strength under high temperature conditions at 90°C.

Industrial Applicability

The layered structure of the present invention can be suitably utilized in applications such as an automobile interior material such as a door trim, an instrument panel, a ceiling, a console box, a pillar, and a glove box; an automobile exterior member such as a bumper, a side guard, an air spoiler, a side protector, a fender, a door panel, and a back door; a home appliance component; or an industrial component such as a building material.

## Claims

**1.** A layered structure formed by directly layering a resin cured layer (ii) comprising a curable resin (E) having a urethane bond, on a molded body (i) comprising a polypropylene-based resin composition,
wherein the polypropylene-based resin composition comprises:

5 to 47 parts by mass of a propylene-based polymer (A) having a melt flow rate (230°C, 2.16 kg load) of 50 to 150 g/10 min and an amount of a decane-soluble portion of 6 to 15% by mass,
20 to 30 parts by mass of a propylene homopolymer (B) having a melt flow rate (230°C, 2.16 kg load) of 10 to 500 g/10 min,
23 to 30 parts by mass of an ethylene/α-olefin copolymer (C) being a random copolymer of ethylene and an α-olefin having 4 to 8 carbon atoms, and having a density of 0.850 to 0.880 g/cm$^3$, a melt flow rate (230°C, 2.16 kg load) of 0.5 to 30 g/10 min, and a melting point peak of 110°C or more, and
30 to 40 parts by mass of an inorganic filler (D), provided that a total amount of the components (A) to (D) is 100 parts by mass.

**2.** The layered structure according to claim 1, wherein the layered structure has a hot shear test strength at 90°C of more than 1.5 MPa in a primerless adhesion test.

**3.** The layered structure according to claim 1, wherein the propylene-based polymer (A) is a block copolymer of propylene and ethylene, and an intrinsic viscosity [η] of a decane-soluble portion of the copolymer is 2 to 9 dl/g.

**4.** The layered structure according to claim 1, wherein the inorganic filler (D) is talc and has an aspect ratio of 3 or more and less than 15.

**5.** The layered structure according to claim 1, wherein the resin cured layer comprising the curable resin (E) having a urethane bond is a cured product of a urethane-based adhesive containing a urethane prepolymer having a polyether skeleton and an aliphatic isocyanate derivative.

**6.** The layered structure according to claim 1, wherein the molded body (i) is an injection molded body or a press molded body.

**7.** The layered structure according to claim 1, wherein the layered structure is used for an automobile exterior member.

**8.** An automobile exterior member comprising the layered structure according to any one of claims 1 to 7.

**9.** A method for producing a layered structure, the method comprising:

a step of molding a polypropylene-based resin composition comprising:

5 to 47 parts by mass of a propylene-based polymer (A) having a melt flow rate (230°C, 2.16 kg load) of 50 to 150 g/10 min and an amount of a decane-soluble portion of 6 to 15% by mass,
20 to 30 parts by mass of a propylene homopolymer (B) having a melt flow rate (230°C, 2.16 kg load) of

10 to 500 g/10 min,
23 to 30 parts by mass of an ethylene/α-olefin copolymer (C) being a random copolymer of ethylene and an α-olefin having 4 to 8 carbon atoms, and having a density of 0.850 to 0.880 g/cm$^3$, a melt flow rate (230°C, 2.16 kg load) of 0.5 to 30 g/10 min, and a melting point peak of 110°C or more, and
30 to 40 parts by mass of an inorganic filler (D),

provided that a total amount of the components (A) to (D) is 100 parts by mass
by injection molding or press molding to produce a molded body (i), and
a step of contacting or applying a curable resin (E) having a urethane bond or a raw material thereof with or to the molded body (i), followed by curing to form a resin cured layer (ii).

[Fig. 1]

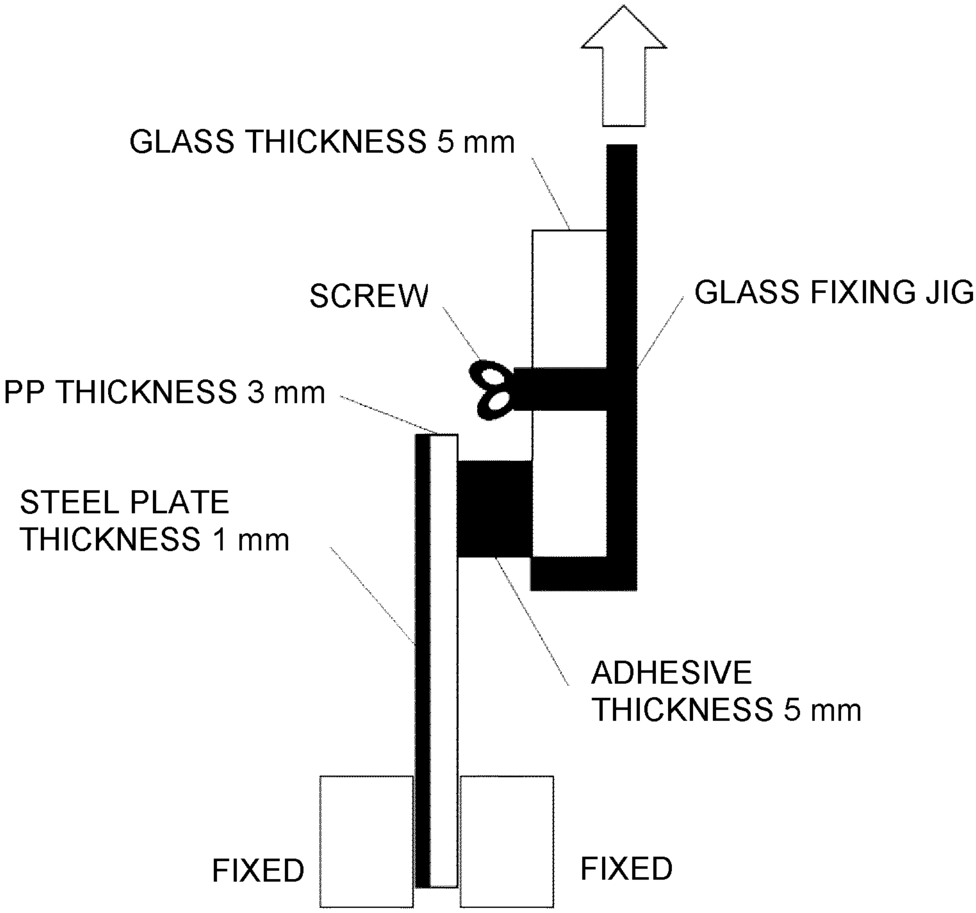
GLASS THICKNESS 5 mm
SCREW
GLASS FIXING JIG
PP THICKNESS 3 mm
STEEL PLATE
THICKNESS 1 mm
ADHESIVE
THICKNESS 5 mm
FIXED
FIXED

## INTERNATIONAL SEARCH REPORT

International application No. **PCT/JP2022/045494**

**A. CLASSIFICATION OF SUBJECT MATTER**

***B32B 27/32***(2006.01)i; ***B32B 27/40***(2006.01)i; ***C08J 5/12***(2006.01)i; ***C08K 3/013***(2018.01)i; ***C08K 3/34***(2006.01)i; ***C08L 23/08***(2006.01)i; ***C08L 23/10***(2006.01)i; ***C08L 23/12***(2006.01)i
FI: B32B27/32 C; C08L23/10; C08L23/12; C08L23/08; C08K3/013; C08K3/34; C08J5/12 CES; B32B27/40

According to International Patent Classification (IPC) or to both national classification and IPC

**B. FIELDS SEARCHED**

Minimum documentation searched (classification system followed by classification symbols)

B32B1/00-43/00; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2020-158554 A (PRIME POLYMER CO., LTD.) 01 October 2020 (2020-10-01) claim 5, paragraphs [0020], [0122], [0133]-[0138], example 4 | 1-9 |
| Y | The Dow Chemical Company, ENGAGE(TM) Polyolefin Elastomers, 2019, URL: https://www.dow.com/content/dam/dcc/documents/en-us/catalog-selguide/777/777-088-01-engage-polyolefin-elastomer-product-selection-guide.pdf p. 2, table 2 | 1-9 |
| Y | WO 2021/124871 A1 (SHOWA DENKO MATERIALS CO., LTD.) 24 June 2021 (2021-06-24) paragraphs [0038], [0044] | 1-9 |
| A | JP 2017-088742 A (PRIME POLYMER CO., LTD.) 25 May 2017 (2017-05-25) claims, examples | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 February 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/045494**

| Patent document cited in search report | Publication date (day/month/year) | Patent family member(s) | Publication date (day/month/year) |
|---|---|---|---|
| JP 2020-158554 A | 01 October 2020 | (Family: none) | |
| WO 2021/124871 A1 | 24 June 2021 | (Family: none) | |
| JP 2017-088742 A | 25 May 2017 | US 2018/0327580 A1<br>claims, examples<br>WO 2017/082358 A1<br>CN 108699303 A<br>MX 2018005941 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010077396 A
- JP H51993051498 A
- JP 2000095919 A
- JP 2007091789 A
- JP 2013159709 A
- JP 2014058614 A
- JP 2016084386 A
- WO 2017082358 A
- JP S57198263310 A
- JP H51993170843 A
- JP 2001354714 A
- EP 585869 A1
- WO 2004016662 A